(19) **Europäisches Patentamt**
**European Patent Office**
**Office européen des brevets**

(11) **EP 3 954 463 A1**

(12) **EUROPÄISCHE PATENTANMELDUNG**

(43) Veröffentlichungstag:
**16.02.2022   Patentblatt 2022/07**

(51) Internationale Patentklassifikation (IPC):
**B03B 9/06** *(2006.01)*       **B03B 4/02** *(2006.01)*
**B03B 4/06** *(2006.01)*       **B07B 4/08** *(2006.01)*
**B07B 9/00** *(2006.01)*

(21) Anmeldenummer: **21189550.3**

(22) Anmeldetag: **04.08.2021**

(52) Gemeinsame Patentklassifikation (CPC):
**B03B 9/065; B03B 4/02; B03B 4/06; B07B 4/08;
B07B 9/00**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **11.08.2020   DE 102020004891**

(71) Anmelder: **ALLGAIER WERKE GmbH**
**73066 Uhingen (DE)**

(72) Erfinder:
• **Trojosky, Mathias**
**73230 Kirchheim unter Teck (DE)**
• **Oberer, Thomas**
**73257 Köngen (DE)**
• **Sebastian de la Sierra, Manuel**
**20280 El Escorial (ES)**

(74) Vertreter: **Bosch Jehle Patentanwaltsgesellschaft
mbH
Flüggenstraße 13
80639 München (DE)**

(54) **SYSTEM UND VERFAHREN ZUR GRAVIMETRISCHEN SORTIERUNG EINES STOFFGEMISCHS**

(57)    Die Erfindung bezieht sich auf ein System zur gravimetrischen Sortierung eines Stoffgemisches bei der Aufbereitung und/oder dem Recycling von Baureststoffen und/oder Abbruchmaterialien mit einer Fraktionierungs-Einheit (2), die dazu ausgebildet ist, das Stoffgemisch in mindestens m Fraktionen (A, B, C) aufzuteilen; mindestens $n \cdot m$ gravimetrische Trenntische.(A.1, A.2.2, A.3.2), die in *m* Kaskaden mit jeweils mindestens *n* Trenntischen verteilt auf *n* Stufen angeordnet sind, wobei die Fraktionierungs-Einheit mit den *m* Trenntischen (A.1) der ersten Stufe derart gekoppelt ist, dass jedem der Trenntische der ersten Stufe eine verschiedene der mindestens *m* Fraktionen zuführbar ist; wobei innerhalb einer jeden Kaskade jeder Trenntisch einer betrachteten Stufe (A.2.2, A.3.2) mit einem Trenntisch (A.1, A.2.2) der vorhergehenden Stufe derart gekoppelt ist, dass entweder die erste Teilfraktion oder die zweite Teilfraktion (12, 22) des Trenntischs (A.1, A.2.2) der vorhergehenden Stufe dem Trenntisch (A.2.2, A.3.2) der betrachteten Stufe zuführbar ist. Ein entsprechendes Verfahren ist ebenfalls Teil der Erfindung.

Fig. 1

**Beschreibung**

Die Erfindung betrifft ein System und ein Verfahren zur gravimetrischen Sortierung eines Stoffgemischs. Speziell bezieht sich die Erfindung auf ein System und ein Verfahren zum Recycling von Baustoffen, speziell Baureststoffen und Abbruchmaterialien, mittels gravimetrischer Sortierung.

Rohstoffe für die Baustoffindustrie gehören weltweit zu den Gütern, welche mit den höchsten Mengen und Förderraten bereitgestellt werden müssen. Insbesondere werden Sande und Kiese benötigt (auch Splitt und Schotter), aber auch Tone, Kalkstein, Gips sowie verschiedene Zuschlagstoffe wie beispielsweise Bims, Perlite, Zeolithe und andere. Diese mineralischen, meist aus natürlichen Rohstoffquellen gewonnenen Grundstoffe werden bei der Herstellung von Beton sowie von Baumaterialien und Bauelementen zu kombinierten Werkstoffen verarbeitet - beispielsweise unter Beifügung von Fasern, Papiergranulat, Styropor, Glaswolle, /x-Holz, Asphalt, Flugasche, Schlacke usw.

Der Bedarf an qualitativ hochwertigen Rohstoffen steigt durch immer häufigere und immer größere Bauvorhaben rapide an, während sich das Angebot durch eine immer schwerer werdende Verfügbarkeit infolge zu Ende gehender Ressourcen verknappt und verteuert.

Gleichzeitig wird das Aufkommen von Abbruchmaterialien immer höher und trifft auf schwierigere Bedingungen zum Deponieren von Bauschutt und Reststoffen. Ein Recycling von Reststoffen aus der Baustoffindustrie ist daher dringend gefordert.

Die beschriebene Vielfältigkeit der Stoffgemische aus unterschiedlichsten Restmaterialen erschwert einerseits ein effizientes Recycling, während andererseits die Anforderungen der Abnehmer in der Bauindustrie an die Qualität der eingesetzten Grundstoffe sehr hoch sind sowie durch Vorschriften und Normen gesetzlich geregelt sind. Diese Umstände haben zu einem sehr konservativen Verhalten bei der Verwendung von Rohstoffen und zu einer sehr beschränkten Offenheit des Marktes für alternative oder recycelte Roh- und Baustoffe geführt.

Da die benötigten Rohstoffe in der Vergangenheit eher preiswert zu erhalten waren, konnten sich komplexe Verfahren zum sortenreinen Trennen der Stoffgemische bisher nicht durchsetzen, da die mit hohem Aufwand erhaltenen Produkte preislich am Markt nicht wettbewerbsfähig waren.

Insbesondere sind für eine Wiederverwertung solche mineralischen Bestandteile wie Beton, Steine, Kiese, Sande sowie auch Bruchstücke von Dachplatten oder Ziegelmauerwerk (Tonwerkstoffe) interessant. Die Abbruchmaterialien müssen also von solchen Stoffen wie Holz, Kunststoffen, Fasern, Papier und Pappe aber auch möglichst von Glas, Metall, Gips, Asphalt usw. befreit werden. Neben den gewonnenen mineralischen Stoffen können die genannten, abgetrennten Störstoffe anderweitig aufbereitet und wiederverwendet oder auch thermisch verwertet werden.

Meist werden in der industriellen Praxis einfache Verfahren angewendet, um wenigstens mittels z.B. Siebung solche Fremdstoffe abzutrennen, die sich durch Körngröße oder Kornform von z.B. Steinen und Kiesen unterscheiden.

Durch die Verwendung von Brechern und Mühlen kann man sich dabei zunutze machen, dass die verschiedenen Stoffe teilweise in charakteristische Partikelgrößen zerbrechen und nachfolgend durch Siebung mit einer wenn auch eher geringen Qualität erhalten werden können. DE 3803809 A1 beschreibt eine mobile Anlage, die aus einer Kombination aus einer Brechereinheit und einer Siebstation besteht. Durch die Mobilität der Anlage wird dem Umstand nachgekommen, dass die Abbruchstoffe in der Regel an immer wechselnden Standorten der Baustellen anfallen. Die Anlage ist wegen ihrer eingeschränkten Größe und Komplexität nicht in der Lage, Stoffe nach deren Dichte zu sortieren, insbesondere nicht, eine Anzahl verschiedener Stoffe sauber aufzutrennen. Weitere mobile Anlagen sind in der WO 2004016355 A1 und der US 6,382,425 B1 beschrieben.

Da die Aufbereitung von Baureststoffen und Abbruchmaterialien durch Brechen und Sieben nur beschränkte Qualitäten erzeugt, werden die erhaltenen Recyclingprodukte im Wesentlichen als Füllmaterialien im Tiefbau, nicht aber zur Herstellung neuer Tragkonstruktionen verwendet. DE 4036427 A1 beschreibt ein durch Brechen und Sieben hergestelltes Baustoffgemisch, welches durch Zugabe hydraulischer Bindemittel und Flugasche zur Herstellung von Tragschichten im Tief- und Straßenbau geeignet ist.

DE 10 2006 006372 A1 beschreibt ein Verfahren zum Recycling von mit einem Prallbrecher zerkleinertem Mauerwerksbruch aus Vollziegeln. Ebenfalls ausschließlich mittels Brechern und Siebmaschinen arbeitet ein durch EP 0548491 B1 beschriebenes Verfahren, um sortenreinen Betonbruch mittels mindestens eines Mahlbrechers zu zerkleinern und durch Siebung in wiederverwertbare Fraktionen zu zerlegen. Eine Abtrennung von Fremdstoffen oder Verunreinigungen findet nicht statt.

EP 0456666 B1 beschreibt ein Verfahren, bei dem aus dem Bauschutt oder auch aus Gewerbemüll die in diesem Fall als wiederverwertbare Wertstoffe definierten Bestandteile wie Holz, Metall, Textil, Papier, Kunststoff o.dgl. rückgewonnen werden sollen. Das Verfahren besteht aus einer Kombination aus Siebmaschinen, Metallseparatoren und manueller Auslese. Die Zusammenfassung der Maschinen soll darüber hinaus mobil in transportablen Containern erfolgen. Auf eine qualitätsgerechte Sortierung der mineralischen Bestandteile zur Wiederverwertung für die z.B. Betonherstellung wird in diesem Fall kein besonderer Wert gelegt.

Da in den Stoffgemischen auch Fremdstoffe vorkommen, die sich nicht durch die Korngröße oder Kornform von den Gutprodukten unterscheiden, versucht man vereinzelt, mittels z.B. Windsichtung, also mittels Ausblasen, solche Stoffe wie Papier oder leichte Fasern zu entfernen, die eine besonders stark von den Gutprodukten abweichende, wesentlich geringere Dichte aufweisen oder durch ihre Form (Papierschnipsel) durch Blasen abgetrennt werden können.

Mittels Windsichtern und sogenannten Zickzack-Sichtern (engl. Zigzag) wird versucht, eine Auftrennung der Stoffgemische nach der Dichte zu erreichen. Windsichter blasen lediglich sehr leichte Materialien aus einem Stoffgemisch nach oben aus. Gemische unterschiedlicher Dichte, deren Bestandteile aber beide relativ schwer sind, können durch Windsichter nicht sinnvoll behandelt werden, da selbst die leichteren Partikel immer noch zu schwer sind, um sie nach oben auszublasen.

AT 398534 B beschreibt ein solches Verfahren, wobei die Stoffgemische vorsortiert werden, mittels Backen- oder Prallbrechern zerkleinert, nachfolgend mittels Siebmaschinen in Fraktionen schmaler Kornbandbreite abgesiebt und die einzelnen Fraktionen danach auf ein oder mehrere Windsichter aufgegeben werden.

Eine Anlage aus mehreren derartigen bzw. ähnlichen rohrförmigen Sichtern beschreibt EP0755726 B1, wobei der Abluftstrom nach Passieren einer Filteranlage und nach Abscheiden der separierten Leichtfraktion aufgetrennt wird und ein Teilstrom der Luft einer Düse im Bereich der Gemischaufgabe zugeführt wird, wodurch eine gute Effizienz erreicht werden soll.

EP0198945 A2 beschreibt eine sehr ähnliche Anlage aus mehreren Sichtern zur Abtrennung von unerwünschten Gutteilchen aus Bauschutt. Die Anlage ermöglicht mittels mehrerer parallel geschalteter Sichterrohre die Behandlung von zuvor in die entsprechende Anzahl klassierten Fraktionen, wobei insbesondere Holz, Kunststoff, Dachpappe und ähnliche Stoffe abgetrennt werden, jedoch keine weitere Sortierung der schweren Fraktionen möglich ist.

Ein Verfahren und eine Vorrichtung zur trockenen Sortierung von Mehrkomponentenprodukten unter Verwendung einer Vielzahl von Windsichtern ist auch in der DE 28 42 259 A1 beschrieben.

Die beschriebenen Wind- bzw. Luftstromsichter und Zickzack-Sichter haben aber den Nachteil, dass sie mit hohen Luftgeschwindigkeiten und damit mit hohen spezifischen Luftmengen betrieben werden müssen und eine für die Luft- und Feststoffströmung konstruktiv bedingte eher hinderliche Geometrie besitzen, wodurch ein hoher Verschleiß der Maschinen bedingt ist. Außerdem weisen Zickzack-Sichter eine große Bauhöhe auf und verursachen damit einen hohen Luftwiderstand und dadurch einen hohen Energiebedarf für die Förderung der Luft durch die Anlagen.

In dem Artikel von Wen-Ling Huang et. al aus Resources, Conservation and Recycling 37 (2002), 23-37 wird ebenfalls ein Verfahren unter Einsatz von Windsichtern beschrieben. Mittels der Windsichter können nur besonders leichte Bestandteile wie Papier und Plastik abgetrennt werden. Die schwere Fraktion muss nachfolgend manuell sortiert werden, um Holz, Nicht-Eisen-Metalle und andere ungewünschte Stoffe zu entfernen.

Häufig werden ergänzend zu maschinellen Verfahren der Sortierung manuelle Tätigkeiten zur Abtrennung schwer detektierbarer oder sehr großer Begleitstoffe eingesetzt. Ein die manuelle Sortierung unterstützender Apparat wird in US 2013 0126401 A1 beschrieben. Ebenfalls eine Anlage zur Ermöglichung einer manuellen Sortierung wird in DE 3644603 C1 vorgestellt.

Ein spezieller Sichter zum Trennen von Bauschutt, der mit einem quer zum fallenden Stoffstrom geführten Luftstrom arbeitet, wird in DE 3708180 A1 beschrieben. Ein breit gezogener Feststoffstrom wird durch den schwertartigen Luftstrom einer horizontal angeordneten Luftdüse geführt, wodurch sich der Energie- bzw. Luftbedarf des Sichters verbessern soll. Wie bei anderen Windsichtern wird die ausgeblasene Leichtfraktion mit der Sichterluft nach oben ausgetragen und in einem Abscheider vom mitgeführten Feststoff befreit. Eine ähnlich wirkende Vorrichtung zur Selektion von Bauschutt wird in DE 4413288 C2 beschrieben.

Insbesondere aus der Aufbereitung von Erzen sind sogenannte Setzmaschinen (engl. Jigging Machines) bekannt, welche in der Lage sind, Partikeln annähernd gleicher Kornform und -größe nach deren Dichte zu trennen. Die Verfahren haben den entscheidenden Nachteil, dass es zu einer Befeuchtung bzw. Aufsättigung der Stoffe mit Wasser kommt und die gewonnenen Produkte in der Regel nachfolgend aufwändig getrocknet werden müssen. Außerdem verbrauchen die Verfahren Wasser und erzeugen stark verschmutzte Abwässer, die behandelt und gereinigt werden müssen. Die zu trennenden Stoffe werden im Kreuzstrom in den aufwärts gerichteten Wasserstrom gegeben. Partikeln geringerer Dichte schwimmen auf den Partikeln höherer Dichte auf, wodurch eine Schichtung der Stoffe nach deren Dichte entsteht. Über ein an einem Ende der Maschine befindliches, einstellbares horizontales Schwert werden die Stoffe möglichst an der Trenngrenze zwischen den übereinander befindlichen Schichten unterschiedlicher Dichte aufgetrennt.

Eine Vorrichtung nach dem Grundprinzip von Setzmaschinen ist etwa aus der DE 10 2015 108563 B3 bekannt.

Da Setzmaschinen bezüglich der behandelbaren Partikelgrößen limitiert sind, kommen alternativ sogenannte Schwimm-Sink-Verfahren zum Einsatz, die die Geschwindigkeit des Absinkens von Partikeln unterschiedlicher Schwere oder Dichte ausnützen, aber ebenfalls mit Wasser betrieben werden und auch zu einer Befeuchtung der Stoffe führen, s. dazu etwa US 5,240,114 A und US 1,839,117 A.

Durch das in US 5,992,774 A beschriebene Verfahren, werden Baureststoffe bei relativ groben Körnungen um 25 mm, bzw. zwischen 45 mm und 75 mm lediglich gewaschen und grob sortiert. Bei diesem Verfahren werden keine Recyclingprodukte hergestellt, welche der Qualität hochwertiger Rohstoffe entsprechen, falls in den Ausgangsstoffen Verunreinigungen durch Holz, Kunststoffe, Gips usw. vorkommen. Ein ähnliches Verfahren beschreibt US 5,314,266 A.

Vereinzelte Versuche, Setzmaschinen statt mit Wasser trocken mit Luft zu betreiben, haben sich wegen zu geringer Trennqualitäten nicht in der industriellen Praxis durchsetzen können.

In DE 10 2004 050026 A1 wird ein Verfahren vorgeschlagen, welches zur trockenen Behandlung der Baureststoffe eine opto-elektronische Sortierung im Nah-Infrarot-Bereich (NIR) nutzt. Die Maschinen nach diesem Prinzip sind jedoch hochkomplex und damit sehr teuer, wodurch das Recycling der Baustoffe mit hohen Kosten und damit mit hohen Preisen für die hergestellten Recyclingmaterialien verbunden ist.

Ein weiteres Verfahrensprinzip zur trockenen Trennung von Stoffgemischen nach der Dichte (gravimetrische Sortierung) wird in sogenannten Trenntischen oder Luft-Trenntischen (engl. densimetric table) genutzt. Trenntische kommen traditionell mit gutem Erfolg beim Recycling von z.B. Kabelschrott zum Einsatz. So werden etwa in AT 345 566 B ein Verfahren und Vorrichtungen zum Rückgewinnen der Bestandteile von Schrott beschrieben, in denen eine Vielzahl von als "Entsteiner" ausgestalteten Trocken-Trenneinrichtungen zum Einsatz kommen. Die beschriebenen Entsteiner haben aber den großen Nachteil, dass sie nur Komponenten mit einem großen Dichteunterschied von mindestens 100 % wirksam zu trennen in der Lage sind.

Zum Trennen von Baustoffen werden herkömmliche Trenntische aktuell nicht oder nur sehr vereinzelt mit beschränkter Funktionalität eingesetzt. Ursache sind zum einen die Beschränkungen bezüglich Größe und Schwere der Partikeln sowie die Begrenzungen in der Trennqualität bei groben, schweren Partikeln oder bei geringen Dichteunterschieden und außerdem die fehlende Verfügbarkeit von Maschinen, die die nötigen hohen und sehr hohen Feststoff-Durchsätze der Baustoffindustrie bewältigen können.

Wesentlicher Nachteil aller vorgenannten Lösungen ist, dass die bekannten Verfahren nicht dazu geeignet sind, die in den Baurestoffen und Abbruchmaterialien enthaltenen, vielfältigen Stoffe so sortenrein zu trennen, dass die erhaltenen Produkte die hohen Qualitätsanforderungen erfüllen, wie sie zur Herstellung von insbesondere tragenden Betonkonstruktionen gefordert werden.

Aufgabe der vorliegenden Erfindung ist es daher, ein System und ein Verfahren zur Sortierung von Abbruchmaterialien aus der Bauindustrie bereitzustellen, welche die bekannten Mängel und Schwächen existierender Lösungen beseitigen und in der Lage sind, auch Stoffgemische aus vielen unterschiedlichen Materialien verschiedener Dichte mit hoher Trennschärfe und hohem Durchsatz zu trennen.

Die erhaltenen Recyclingstoffe sollen Wertstoffe darstellen, die insbesondere als Zuschlagstoffe zur Betonherstellung verwendet werden können und die die hohen Qualitätsansprüche und strengen Vorschriften und Gesetze bezüglich im Bauwesen einzusetzender Rohstoffe erfüllen.

Die erfindungsgemäße Aufgabe wird durch das System des Anspruchs 1, die Anlage nach Anspruch 9, die Verwendung gemäß Anspruch 10, sowie das Verfahren nach Anspruch 11 gelöst. Weitere vorteilhafte Ausgestaltungen der Erfindung sind in den abhängigen Ansprüchen 2-8 und 12-16 angegeben.

Gemäß einem Aspekt der Erfindung wird ein System zur gravimetrischen Sortierung eines Stoffgemischs bereitgestellt. Dieses System umfasst: eine Fraktionierungs-Einheit, die dazu ausgebildet ist, das Stoffgemisch in mindestens $m$, $m \geq 1$, Fraktionen aufzuteilen, wobei jede Fraktion Partikeln einer vorgegebenen Größenverteilung enthält; mindestens $n \cdot m$ gravimetrische Trenntische, die in $m$ Kaskaden mit jeweils mindestens $n$, $n \geq 1$, gravimetrischen Trenntischen verteilt auf $n$ Stufen angeordnet sind, sodass pro Kaskade jede Stufe mindestens einen gravimetrischen Trenntisch umfasst. Die Fraktionierungs-Einheit ist dabei mit den $m$ gravimetrischen Trenntischen der ersten Stufe derart gekoppelt, dass jedem der gravimetrischen Trenntische der ersten Stufe eine verschiedene der mindestens $m$ Fraktionen zuführbar ist. Jeder gravimetrische Trenntisch ist dazu ausgestaltet, ihm zugeführte Partikeln in eine ihm zugeordnete erste Teilfraktion von Partikeln mit einer Dichte kleiner als eine ihm zugewiesene Trenndichte und eine ihm zugeordnete zweite Teilfraktion von Partikeln mit einer Dichte größer als die zugewiesene Trenndichte zu trennen. Innerhalb einer jeden Kaskade ist jeder gravimetrische Trenntisch einer betrachteten Stufe mit einem gravimetrischen Trenntisch der vorhergehenden Stufe derart gekoppelt, dass entweder die erste Teilfraktion oder die zweite Teilfraktion des gravimetrischen Trenntischs der vorhergehenden Stufe dem gravimetrischen Trenntisch der betrachteten Stufe zuführbar ist. Wenn die erste, also leichte, Teilfraktion zugeführt wird, wird die zugewiesene Trenndichte des gravimetrischen Trenntischs der betrachteten Stufe kleiner gewählt wird als die zugewiesene Trenndichte des gravimetrischen Trenntischs der vorhergehenden Stufe. Wehn die zweite, also schwere, Teilfraktion zugeführt wird, wird die zugewiesene Trenndichte des gravimetrischen Trenntischs der betrachteten Stufe größer gewählt wird als die zugewiesene Trenndichte des gravimetrischen Trenntischs der vorhergehenden Stufe.

Das Stoffgemisch umfasst typischerweise Baureststoffe oder Abbruchmaterialien. Vorzugsweise wird das System bei der Aufbereitung und/oder dem Recycling von Baureststoffen und Abbruchmaterialien eingesetzt.

Typischerweise umfasst das Stoffgemisch dabei Kunststoffe, Holz, Gips, Glas, Ton, Beton, Keramik, Steine, Schotter und/oder Metall, typischerweise vorliegend in Teilen oder Stücken von unterschiedlichen Größen.

Bevorzugt ist $m > 1$ oder auch $m \geq 3$. Besonders bevorzugt gilt $n \cdot m > 1$; dies bedeutet, dass entweder mehr als eine Kaskade oder mehr als ein gravimetrischer Trenntisch pro Kaskade vorhanden ist. Weiter ist bevorzugt $n > 1$. Für den Fall $n = 1$ gibt es nur eine Stufe von gravimetrischen Trenntischen. In diesem Fall werden sämtliche in der ersten Stufe getrennten Teilfraktionen zur weiteren Verarbeitung abtransportiert oder gesammelt. Eine Zuführung an gravimetrische Trenntische einer weiteren Stufe entfällt. Erfindungsgemäß ist es auch, wenn die Fraktionierungs-Einheit mehr Fraktionen erzeugt als Kaskaden von gravimetrischen Trenntischen vorhanden sind.

Bei den erfindungsgemäßen gravimetrischen Trenntischen handelt es sich um gravimetrische Trenntische, die zur trockenen gravimetrischen Sortierung eingesetzt werden. Das heißt, bei den erfindungsgemäßen Trenntischen handelt es sich um trocken arbeitende Trenntische zur Sortierung nach der Dichte.

Besonders bevorzugt umfasst jeder der gravimetrischen Trenntische einen Arbeitsboden, der dazu ausgelegt ist, von Luft durchströmt und in Vibration versetzt zu werden, um dadurch die erste Teilfraktion von der zweiten Teilfraktion zu trennen.

Es ist von Vorteil, wenn die zum Einsatz kommenden gravimetrischen Trenntische einen Arbeitsboden besitzen, der von unten mit Luft durchströmt werden kann und schräg in dem Trenntisch angeordnet ist. Es ist weiter von Vorteil, wenn das zu trennende Stoffgemisch mittig oder nahe der Mitte auf den Arbeitsboden aufgegeben wird. Der Arbeitsboden ist zweckmäßig daher perforiert. Es ist besonders zweckmäßig, wenn der Arbeitsboden in einem bestimmten Winkel zur Senkrechten in Richtung der Steigung des geneigten Arbeitsbodens in Vibration versetzt werden kann. Die Partikeln, die nach dem Eintrag in die Maschine auf dem Arbeitsboden auftreffen und wegen ihrer Schwere, d.h. wegen ihrer großen Dichte, trotz der vertikalen Luftströmung bevorzugt auf den Arbeitsboden absinken und dort verbleiben, werden in Richtung der Vibration und damit in Richtung der Steigung des Arbeitsbodens gefördert; am höher gelegenen einen Ende des Arbeitsbodens können diese Partikeln dann ausgetragen werden. Während es sich bei diesem Produktanteil um Stoffe höherer Dichte handelt, kommt es im Zentrum der Produktaufgabe zu einer leichten Fluidisierung des Stoffgemisches in Folge des durch den perforierten Arbeitsboden geführten Luftstromes. Dadurch werden die leichten Partikeln, d.h. Partikeln mit einer geringeren Dichte, durch die senkrechte Aufwärtsströmung der Luft leicht angehoben. Dadurch haben sie keinen oder nur einen geringen Kontakt zum Arbeitsboden haben. Des Weiteren erfolgt zweckmäßig eine Schichtung der Bestandteile des Stoffgemisches nach der Dichte. Im Stoffgemisch enthaltene leichtere Partikeln schwimmen auf den schwereren Partikeln auf und gleiten auf der Schicht hoher Dichte zum tiefer liegenden anderen Ende des Arbeitsbodens; dort können sie ausgetragen werden.

Mithilfe der gravimetrischen Trenntische erfolgt daher eine Sortierung der ihnen zugeführten Fraktionen nach der Dichte der Bestandteile bzw. Partikeln der Fraktionen. Durch die Einstellung der Stärke des Luftstroms, des Neigungswinkels des Arbeitsbodens, der Vibrationsfrequenz und/oder der Vibrationsamplitude ist es möglich, eine bestimmte Dichte vorzugeben, die eine Teilfraktion von einer anderen Teilfraktion unterscheidet. Diese bestimmte Dichte wird als Trenndichte bezeichnet. In anderen Worten, der gravimetrische Trenntisch gibt Partikeln mit einer Dichte unterhalb der ihm zugewiesenen Trenndichte als eine erste Teilfraktion aus, Partikeln mit einer Dichte oberhalb der zugewiesenen Trenndichte als eine zweite Teilfraktion aus. Die genannten Parameter - Einstellung der Stärke des Luftstroms, des Neigungswinkels des Arbeitsbodens, der Vibrationsfrequenz und/oder der Vibrationsamplitude - sind sowohl von der Größenverteilung als auch von der Dichte des Stoffgemischs abhängig. Das heißt, die genannten Parameter müssen, um eine bestimmte Trenndichte zuzuweisen, an die Größenverteilung der (Teil-)Fraktion angepasst werden. Aufgrund der genannten einstellbaren Parameter sind die erfindungsgemäß einsetzbaren gravimetrischen Trenntische sehr flexibel, weil sie einfach auf geänderte Anforderungen der zu behandelnden Ausgangsstoffe eingerichtet und justiert werden können.

Es versteht sich, dass jeder der im erfindungsgemäßen System benutzten gravimetrischen Trenntische eine andere ihm zugewiesene Trenndichte besitzen kann. Die Wahl einer vorteilhaften Trenndichte in Abhängigkeit der einem bestimmten gravimetrischen Trenntisch zugeführten Teilfraktion wird weiter unten noch beschrieben.

Dadurch, dass die erfindungsgemäße Fraktionierungs-Einheit dazu ausgebildet ist, das Stoffgemisch in mindestens $m$ Fraktionen jeweils mit Partikeln einer vorgegeben Größenverteilung aufzuteilen, wird der Vorteil erreicht, dass jedem gravimetrischen Trenntisch der ersten Stufe jeweils Partikeln zugeführt werden, die sich in einem bestimmten vorgegebenen Größenbereich befinden. Bevorzugt erfolgt die Fraktionierung nach der Korngröße der Partikeln. Die Korngröße der Partikeln kann beispielsweise über die Maschenweite der in der Fraktionierungs-Einheit eingesetzten Siebe vorgegeben und bestimmt werden.

Speziell ist es möglich, dass die erste Fraktion Partikeln mit einer Korngröße in einem ersten Bereich $(x_{11}, x_{12})$ enthält, die zweite Fraktion Partikeln mit einer Korngröße in einem zweiten Bereich $(x_{21}, x_{22})$, etc. und die $m$-te Fraktion Partikeln mit einer Korngröße in einem $m$-ten Bereich $(x_{m1}, x_{m2})$ enthält. Zweckmäßigerweise überlappt sich kein Bereich mit einem anderen; besonders bevorzugt schließen die Bereiche nahezu nahtlos aneinander an, d.h, $x_{12} = x_{21}$; $x_{22} = x_{31}$; etc. $x_{(m-1)2} = x_{m1}$.

Bevorzugt wird die Korngrößenverteilung der Fraktionen so gewählt, dass die nächsthöhere Partikelgröße immer dem Doppelten der vorherigen Partikelgröße ist, also $x_{m2} = 2 \cdot x_{m1}$.

Zweckmäßige Korngrößenverteilungen sind $(x_{11}, x_{12})$ = (0 mm, 3 mm), $(x_{21}, x_{22})$ = (3 mm, 9 mm), $(x_{31}, x_{32})$ = (9 mm, 25 mm) oder auch $(x_{11}, x_{12})$ = (0 mm, 2 mm), $(x_{21}, x_{22})$ = (2 mm, 4 mm), $(x_{31}, x_{32})$ = (4 mm, 8 mm), $(x_{41}, x_{42})$ = (8 mm, 16 mm), $(x_{51}, x_{52})$ = (16 mm, 32 mm) u.a.

Spezieller Zweck der Aufteilung des Stoffgemischs in Fraktionen nach der Größenverteilung der Partikeln und der Zuführung der Fraktionen an unterschiedliche gravimetrische Trenntische ist eine präzisere Trennung der Partikeln nach ihrer Dichte. Besonders bevorzugt handelt es sich bei der Größenverteilung um die Korngrößenverteilung. Grund dafür ist, dass kleine, schwere Partikeln ein ähnliches Fluidisierungs- oder Sinkverhalten in Luft aufweisen können wie größere, leichte Partikeln. Das bedeutet, dass ohne die Fraktionierung des Stoffgemischs anhand der Größe, speziell Korngröße, der Partikeln die Güte der Sortierung nach der Dichte mithilfe von gravimetrischen Trenntischen schlecht sein kann. In anderen Worten, vorteilhafterweise werden die (Korn)größenverteilungen der einzelnen Fraktionen des Stoffgemischs derart gewählt, dass die Partikeln nicht nach dem Gewicht der Einzelpartikeln sortiert werden, sondern tatsächlich nach der Dichte der die Partikeln bildenden Stoffe. Dieses ist bei engen Fraktionen $m,$ für deren Korngrößenbereiche z.B. $(x_{m1}, x_{m2} = 2 \cdot x_{m1})$ gilt, der Fall. Abhängig vom Dichteunterschied der zu trennenden Komponenten können die Bereiche auch schmäler oder breiter gewählt werden.

Ein weiterer Vorteil der Erfindung besteht damit also darin, dass aufgrund der Fraktionierung des Stoffgemischs die Sortierung nach der Dichte der einzelnen Partikeln durch jeden gravimetrischen Trenntisch sehr präzise erfolgen kann. Grundsätzlich kann die Trenndichte beliebig gewählt werden, sodass Materialien auch mit einem geringen Dichteunterschied voneinander getrennt werden können. So können die gravimetrischen Trenntische vorzugsweise derart eingerichtet sein, dass Partikeln von Stoffen voneinander getrennt werden können, deren Dichten einen Unterschied von 50 %, bevorzugt von nur 20 %, besonders bevorzugt von nur 10 % aufweisen. Gleichwohl ist es dem Fachmann bekannt, dass eine hundertprozentig genaue Sortierung technisch i.d.R. nicht realisiert werden kann. Das heißt, dass jede Fraktion oder Teilfraktion - inklusive Leicht- und Schwerfraktion - einen technisch bedingten geringen Anteil von Partikeln enthält, deren (Korn)größe bzw. Dichte außerhalb des vorgegebenen Rahmens liegt. Wenn hier gefordert wird, dass jede Fraktion Partikeln einer vorgegebenen Größenverteilung enthält, oder dass Partikeln einer Teilfraktion bzw. Leicht- oder Schwerfraktion eine Dichte größer oder kleiner als eine vorgegebene Trenndichte besitzen, so schließt diese Sprechweise nicht aus, dass ein geringer Anteil (typischerweise unter 15 %, bevorzugt unter 10 %, besonders bevorzugt unter 5 %) der Partikeln der (Teil-, Leicht-, Schwer-)Fraktion nicht die geforderten Anforderungen aus der Praxis erfüllen. Für die angegebenen Zahlenbeispiele sagt man auch, dass die gravimetrischen Trenntische eine Trenneffizienz von 85 %, 90 % bzw. 95 % aufweisen. Es ist zweckmäßig, wenn die gravimetrischen Trenntische eine Trenneffizienz im Bereich von 80 % bis 95 % aufweisen.

Dadurch, dass eine Fraktion die Sortierung durch mindestens n gravimetrische Trenntische einer Kaskade durchläuft, wird gewährleistet, dass die einzelnen Bestandteile bzw. Partikeln präzise anhand ihrer Dichten separiert werden können. Jede weitere Stufe der Kaskade ermöglicht eine weitere, feinere Eingrenzung eines Dichtebereichs. Je enger der Dichtebereich, desto weniger Stoffe bzw. Materialen (Komponenten) wird die zugehörige Teilfraktion enthalten. Mit anderen Worten, das erfindungsgemäße System ermöglicht eine Trennung von Partikeln auch dann, wenn die Dichtunterschiede der zu trennenden (Teil-)Fraktiorien nur sehr gering sind.

Als Komponente wird nachfolgend nicht nur ein Reinstoff bzw. Reinmaterial bezeichnet, eine Komponente kann auch ein Mischmaterial, einen Mischstoff oder selbst ein Stoffgemisch umfassen.

Die erfindungsgemäße Kombination von Fraktionierung und einer mithilfe von parallelen in Kaskade angeordneten gravimetrischen Trenntischen ermöglicht damit ein (nahezu) sortenreines Trennen des Stoffgemischs.

Das System hat den weiteren Vorteil, dass aufgrund der Benutzung der gravimetrischen Trenntische auf den Einsatz von Wasser bei der Aufbereitung verzichtet werden kann. Die Komponenten werden nicht unnötig befeuchtet.

Die Teilfraktion, die nicht einem gravimetrischen Trenntisch der nächsten Stufe innerhalb einer Kaskade zugeführt wird, kann erfindungsgemäß in vielerlei Weise weiterverarbeitet werden. So ist es beispielsweise möglich, dass, diese Teilfraktion etwa mithilfe von Förderbändern abtransportiert und in entsprechenden Behältern gesammelt wird.

Bevorzugt enthält pro Kaskade jede Stufe genau einen gravimetrischen Trenntisch, dem eine Teilfraktion der vorhergehenden Stufe zuführbar ist.

In diesem Fall umfasst das System $n \cdot m$ gravimetrische Trenntische, die in n Stufen zu je m gravimetrischen Trenntischen angeordnet sind, und wobei je n gravimetrische Trenntische aus verschiedenen Stufen eine Kaskade bilden. Diese Anordnung kann man sich - abstrakt ausgedrückt - als Matrix vorstellen, in der die gravimetrischen Trenntische in n Zeilen, also parallel, und m Spalten angeordnet sind; die reale geometrische Anordnung der gravimetrischen Trenntische ist selbstredend nicht auf eine Matrixstruktur beschränkt, Letztere dient nur der einfacheren Beschreibung der erfindungsgemäßen Stufen und Kaskaden. Denn unter Zugrundelegung des Bilds der Matrix können die Stufen des erfindungsgemäßen Systems als Zeilen der Matrix veranschaulicht werden, eine Kaskade von gravimetrischen Trenntischen als Spalte der Matrix.

Die Anzahl P der Endprodukte, etwa der erhaltenen Komponenten, z.B. reinen Materialien, die je Fraktion bzw. Kaskade für den Fall erhalten werden, dass eine Kaskade n Stufen aufweist, und von einer Stufe zur nächsten jeweils stets nur eine Teilfraktion an einen entsprechenden gravimetrischen Trenntisch weitertransportiert wird, ergibt sich wie folgt: Für jede Stufe k mit $1 \leq k \leq n-1$ kann der jeweilige gravimetrische Trenntisch eine Teilfraktion mit einem Endprodukt abtrennen, wohingegen die andere Teilfraktion jeweils an einen entsprechenden gravimetrischen Trenntisch der darauffolgenden Stufe zugeführt wird. Der gravimetrische Trenntisch der letzten Stufe k = n erzeugt zwei Teilfraktionen, somit kann er zwei Endprodukte abtrennen. Damit ist also $P = (n-1) + 2 = n + 1$. Oder in anderen Worten, um P Endprodukte zu erhalten, sind in der beschriebenen Anordnung mindestens P - 1 Stufen, somit mindestens P - 1 gravimetrische Trenntische pro Kaskade erforderlich. Weiter kann angenommen werden, dass die Verarbeitungsdauer *T* der Teilfraktionen linear mit der Anzahl der Stufen zunimmt, d.h., um *P* Endprodukte aus dem Stoffgemisch zu trennen, ist *T etwa proportional zu P* - 1. Die Wahl geeigneter Trenndichten zur Umsetzung dieser Anordnung wird weiter unten beschrieben.

Erfindungsgemäß ist auch, wenn innerhalb einer Kaskade für jede Stufe die erste Teilfraktion einer bestimmten Stufe dem gravimetrischen Trenntisch der darauffolgenden Stufe zugeführt wird. Das heißt, von den beiden Teilfraktionen, die der gravimetrische Trenntisch der bestimmten Stufe der Kaskade erzeugt, wird innerhalb der Kaskade stets nur jene Teilfraktion dem gravimetrischen Trenntisch der darauffolgenden Stufe der Kaskade zugeführt, die Partikeln mit einer Dichte kleiner als die dem gravimetrischen Trenntisch der bestimmten Stufe zugewiesene Trenndichte enthält. Diese Teilfraktion wird auch als Leichtfraktion bezeichnet.

Zweckmäßig ist es in diesem Fall, die Trenndichte dann jeweils so zu wählen, dass diese zwischen den Dichten der schwersten und zweitschwersten Komponente in der zu trennenden Fraktion der betrachteten Stufe liegt. Mit anderen Worten, die dem gravimetrischen Trenntisch einer betrachteten Stufe zugewiesene Trenndichte ist derart gewählt, dass nur die schwerste Komponente der ihm zugeführten Fraktion abgetrennt wird. Dann kann eine Trennung nach den einzelnen Komponenten bewirkt werden.

Zweckmäßig ist es dann, die jeweilige andere, zweite Teilfraktion aus jeder Trennstufe etwa zum Sammeln in einem Behälter oder dergleichen abzutransportieren.

Erfindungsgemäß ist auch, wenn innerhalb einer Kaskade für jede Stufe nur die zweite Teilfraktion der einen Stufe dem gravimetrischen Trenntisch der darauffolgenden Stufe zugeführt wird. Das heißt, von den beiden Teilfraktionen, die der gravimetrische Trenntisch der bestimmten Stufe der Kaskade erzeugt, wird innerhalb der Kaskade stets jene Teilfraktion dem gravimetrischen Trenntisch der darauffolgenden Stufe der Kaskade zugeführt, die Partikeln mit einer Dichte größer als die dem gravimetrischen Trenntisch der bestimmten Stufe zugewiesene Trenndichte enthält. Diese Teilfraktion wird auch als Schwerfraktion bezeichnet.

Zweckmäßig ist es in diesem Fall, die Trenndichte dann jeweils so zu wählen, dass diese zwischen den Dichten der leichtesten und zweitleichtesten Komponente in der zu trennenden Fraktion der betrachteten Stufe liegt. Mit anderen Worten, die dem gravimetrischen Trenntisch einer betrachteten Stufe zugewiesene Trenndichte ist derart gewählt, dass nur die leichteste Komponente der ihm zugeführten Fraktion abgetrennt wird.

Zweckmäßig ist es dann, die jeweilige erste, also leichte Teilfraktion etwa zum Sammeln in einem Behälter oder dergleichen abzutransportieren.

Erfindungsgemäß ist es auch möglich, dass nur ein Teil der in einer Stufe erzeugten Teilfraktionen an jeweilige zugeordnete gravimetrische Trenntische der darauffolgenden Stufe zugeführt wird. In diesem Fall ist es dann so, dass es Stufen gibt, in denen Teilfraktionen entweder etwa in Behältern gesammelt werden oder anderweitig weiterverarbeitet werden. Eine auf einer bestimmten Stufe erzeugte Teilfraktion braucht etwa dann nicht mehr einem weiteren gravimetrischen Trenntisch zugeführt zu werden, wenn diese Teilfraktion bereits Partikeln eines bestimmten Dichtebereichs enthält, der es erlaubt, festzustellen, dass die Partikeln einem einzigen Material (Komponente) zuzuordnen sind. Für die Teilfraktion bzw. Teilfraktionen, die einem gravimetrischen Trenntisch der nächsten Stufe innerhalb einer Kaskade zugeführt wird bzw. werden, ist es möglich, auch die Partikeln der besagten Teilfraktion noch weiter nach deren Dichte zu trennen.

Werden zusätzlich innerhalb einer Kaskade pro Stufe mehr als ein gravimetrischer Trenntisch eingesetzt, um zugeordnete Teilfraktionen nach der Dichte zu trennen, so wird die Kaskadenstruktur zu einer Baumstruktur von gravimetrischen Trenntischen. So kann es sein, dass je Fraktion in der Stufe *k* maximal $2^{k-1}$ ($1 \leq k \leq n$) gravimetrische Trenntische vorhanden sind. Die innerhalb der Baumstruktur über mehrere Stufen miteinander gekoppelten gravimetrischen Trerintische bilden - bildlich gesprochen - Verästelungen / Äste des Baumes. Es ist erfindungsgemäß nicht erforderlich, dass jeder Ast bis zur *n*-ten Stufe reicht, d.h., es kann auch sein, dass gewisse Verästelungen / Äste bereits auf Stufe *k* < *n* enden, weil der entsprechende gravimetrische Trenntisch dann mit keinem weiteren gravimetrischen Trenntisch der darauffolgenden Stufe mehr gekoppelt ist.

Vorteilhafterweise umfasst das System mindestens eine Kaskade, die mindestens eine Stufe *k,* 1 < *k* < *n,* mit zumindest einem zusätzlichen, zweiten, gravimetrischen Trenntisch aufweist, wobei dem zweiten gravimetrischen Trenntisch eine Teilfraktionen der vorhergehenden Stufe *k* - *1* zuführbar ist, und, wenn die Stufe *k* mehr als einen zusätzlichen gravimetrischen Trenntisch aufweist, jedem dieser weiteren gravimetrischen Trenntischen eine entsprechende Teilfraktion der vorhergehenden Stufe *k* - *1* zuführbar ist.

Bevorzugt ist innerhalb des Systems mindestens eine Kaskade vorhanden, die mindestens eine Stufe mit zwei gravimetrischen Trenntischen aufweist. Diese Stufe sei die Stufe *k,* 1 < *k* < *n.* Jedem dieser beiden gravimetrischen Trenntische ist eine Teilfraktion der vorhergehenden Stufe *k* - *1* zuführbar. Jeder dieser beiden gravimetrischen Trenntische trennt die ihm zugeführte Teilfraktion jeweils in eine entsprechende weitere leichte Teilfraktion und schwere Teilfraktion. Jedem gravimetrischen Trenntisch ist dabei eine bestimmte Trenndichte zugewiesen; die Trenndichten sind zweckmäßigerweise unterschiedlich gewählt. Dadurch werden vier Teilfraktionen gebildet. Gemäß einer zweckmäßigen Ausgestaltung werden von diesen vier Teilfraktionen allerdings nur höchstens zwei Teilfraktionen an die darauffolgende Stufe *k* + 1 transportiert. Weist die darauffolgende Stufe abermals zwei gravimetrische Trenntische auf, so wird jedem dieser gravimetrischen Trenntische jeweils eine der in Stufe k erzeugten Teilfraktion zugeführt; weist Stufe k + 1 nur einen gravimetrischen Trenntisch in der Kaskade auf, so wird dieser Stufe nur eine Teilfraktion zugeführt. Befinden sich in Stufe k + 1 zwei gravimetrische Trenntische in der Kaskade, so können entweder die beiden in Stufe k von einem gravimetrischen Trenntisch erzeugten Teilfraktionen den gravimetrischen Trenntischen der Stufe k+ 1 zugeführt werden, oder es kann eine Teilfraktion des einen gravimetrischen Trenntischs der Stufe k und eine Teilfraktion des anderen gravimetrischen Trenntischs der Stufe kan die gravimetrischen Trenntischen der Stufe k + 1 zugeführt werden. Die Teilfraktionen, die nicht weiteren gravimetrischen Trenntischen zugeführt werden, können anderweitig verarbeitet und/oder in Behältern gesammelt werden.

Es ist zweckmäßig, wenn je Fraktion pro Stufe höchstens zwei gravimetrische Trenntische eingesetzt werden.

Besonders vorteilhaft ist, wenn zumindest eine Kaskade in der Stufe k eine Anzahl von $2^{k-1}$ gravimetrischen Trenntischen aufweist, und zwar für jedes k = 1 bis k = n. Das heißt, von einer Stufe zur nächsten werden stets sämtliche in einer bestimmten Stufe erzeugten Teilfraktionen an entsprechende zugeordnete gravimetrische Trenntische der darauffolgenden Stufe zugeführt. In einer Stufe k kommen damit $2^{k-1}$ gravimetrische Trenntische, mit jeweils zugewiesenen Trenndichten, parallel zum Einsatz. Weist eine Kaskade n Stufen auf, so enthält die Kaskade insgesamt

$$N = \sum_{k=1}^{n} 2^{k-1} = 2^n - 1$$

gravimetrische Trenntische. Nachdem von jedem gravimetrischen Trenntisch jeder Stufe k von 1 bis n - 1 beide Teilfraktionen an zugeordnete gravimetrische Trenntische der darauffolgenden Stufe zugeführt werden, werden bei der beschriebenen Anordnung Endprodukte nur von den gravimetrischen Trenntischen der letzten Stufe k = n erzeugt. Nachdem die Stufe k = n insgesamt $2^{n-1}$ gravimetrische Trenntische enthält, und jeder gravimetrische Trenntisch zwei Teilfraktionen erzeugt, können auf Stufe n insgesamt $P = 2^n$ Endprodukte erzeugt werden.

Sollen P Endprodukte in einer Kaskade aus dem Stoffgemisch getrennt werden, so sind dafür

$$n = \lceil \log_2 P \rceil$$

Stufen erforderlich. Die Klammer in dem vorstehenden Ausdruck gibt an, dass das Ergebnis auf die nächste ganze Zahl aufgerundet wird. Sollen damit P Endprodukte mit dieser Anordnung erzeugt werden, sind dafür

$$N = 2^n - 1 = 2^{\lceil \log_2 P \rceil} - 1$$

gravimetrische Trenntische erforderlich. Man erkennt, dass, wenn P eine Potenz von 2 ist, $P = 2^n$, dass dann N = P - 1 gravimetrische Trenntische erforderlich sind. Dies sind genauso viele wie bei der oben beschriebenen Anordnung, bei der von einer Stufe zur nächsten jeweils stets nur eine Teilfraktion weitertransportiert wird. Nachdem bei der hier betrachteten Anordnung allerdings in der Kaskade je Stufe mehrere gravimetrische Trenntische parallel Partikeln trennen, sind nur $n = \lceil \log_2 P \rceil$ Stufen erforderlich, und die Zeit, die für die Trennung der P Endprodukte benötigt wird, ist Tetwa proportional zu $\lceil \log_2 P \rceil$. Das heißt, die Gesamt-Trenndauer nimmt bei der betrachteten Anordnung nur logarithmisch mit der Anzahl der Endprodukte zu, wohingegen bei der oben beschriebenen Anordnung, bei der von einer Stufe zur nächsten jeweils stets nur eine Teilfraktion weitertransportiert wird, die Gesamt-Trenndauer linear mit der Anzahl der Endprodukte ansteigt. Mit der hier beschriebenen Anordnung kann damit eine deutliche Zeitersparnis bewirkt werden.

Sollen $P = 2^n$ vorgegebene Endprodukte in Stufe n zur Verfügung stehen, wobei die einer Kaskade zugeführte Fraktion als Stoffgemisch mit entsprechenden $P = 2^n$ Komponenten / Stoffen bereitgestellt ist, so werden zweckmäßig die Trenndichten für die $2^{k-1}$ gravimetrischen Trenntische der Stufe k wie folgt bestimmt: Für die Stufe k = 1 wird die Trenndichte so gewählt, dass sie zwischen den Dichten der leichtesten P/2 Komponenten und schwersten P/2 Komponenten liegt (wobei "leicht" und "schwer" hier stets auf die Dichte und nicht auf die Masse der Partikeln bezogen ist). Für die Stufe k = 2 wird die Trenndichte des ersten gravimetrischen Trenntischs so gewählt, dass sie zwischen den Dichten der leichtesten P/4 Komponenten und den nächstschwereren P/4 Komponenten liegt; die Trenndichte des zweiten gravimetrischen Trenntischs wird so gewählt, dass sie. zwischen den Dichten der nächstnächstschwereren P/4 Komponenten und den schwersten P/4 Komponenten liegt. Für die Stufe k = 3 und folgende ergeben sich die Trenndichten durch Fortsetzung des beschriebenen Schemas. Anders ausgedrückt: wird einem bestimmten gravimetrischen Trenntisch eine (Teil-)Fraktion mit q zu trennenden Komponenten zugeführt, so wird ihm in der betrachteten Konfiguration zweckmäßigerweise. eine Trenndichte zugewiesen, die so bestimmt ist, dass eine von dem gravimetrischen Trenntisch erzeugte Teilfraktion die $q/2$ leichteren Komponenten, die andere erzeugte Teilfraktion die $q/2$ schwereren Komponenten enthält.

Je mehr gravimetrische Trenntische pro Kaskade und pro Stufe parallel zum Trennen von Teilfraktionen eingesetzt werden, desto kürzer ist die Gesamt-Trenndauer zur Trennung eines Stoffgemischs in eine vorgegebene Anzahl von Endprodukten. Erfolgt zu diesem Zweck eine Fraktionierung des Ausgangsstoffgemisches in besonders enge Kornklassen, steigt außerdem die Sortiergenauigkeit eines jeden einzelnen Trenntisches.

In dem vorstehend beschriebenen Beispiel ist davon ausgegangen worden, dass die Anzahl $P$ der zu trennenden Komponenten eine Potenz von 2 darstellt. Ist $P$ keine Potenz von 2, so ist es zweckmäßig, in der letzten Stufe $n$ nicht die maximal mögliche Anzahl, $2^{n-1}$, an gravimetrischen Trenntischen vorzusehen, sondern eine geringere Anzahl $K$, die noch ausreichend ist, um die $P$ Komponenten zu trennen.

Um diese Anzahl $K$ an gravimetrischen Trenntischen in der letzten Stufe $n$ zu ermitteln, soll zunächst auf folgende allgemein gültige Beobachtung (d.h., dieser Sachverhalt ist nicht auf eine spezielle Anordnung der gravimetrischen Trenntische beschränkt) hingewiesen werden: Jeder der dem System zusätzlich hinzugefügte gravimetrische Trenntisch erhöht die Anzahl der Komponenten, die aus der Eingangs-Fraktion getrennt werden können, um 1.

Unter Heranziehung des beschriebenen Zusammenhangs, muss $K$ in Stufe $n$ dann so gewählt werden, dass die Anzahl der mithilfe der in Stufe $n$ - 1 erhaltenen Teilfraktionen (das sind $2^{n-1}$) auf P erhöht wird. Also

$$2^{n-1} + K = P$$
$$\implies K = P - 2^{n-1}.$$

In diesem Fall enden somit einige Äste der Baumstruktur bereits in der Stufe $n$- 1, wohingegen $K$ Äste bis zur Stufe n reichen.

Die Gesamtzahl $N'$ der in der betrachteten Kaskade verwendeten gravimetrischen Trenntische ist

$$N' = K + \sum_{k=1}^{n-1} 2^{k-1} = K + 2^{n-1} - 1 = P - 1.$$

Das heißt, auch in diesem Fall sind genauso viele gravimetrische Trenntische erforderlich wie bei der oben näher beschriebenen Anordnung, bei der von einer Stufe zur nächsten jeweils stets nur eine Teilfraktion weitertransportiert wird. Es sind allerdings nur $n = \lceil \log_2 P \rceil$ Stufen erforderlich, und die Zeit, die für die Trennung der $P$ Endprodukte benötigt wird, ist $T$ etwa proportional zu $\lceil \log_2 P \rceil$. Das heißt, die Gesamt-Trenndauer nimmt bei dieser betrachteten Anordnung auch nur logarithmisch mit der Anzahl der Endprodukte zu.

Die Trenndichten, die in der vorstehend beschriebenen Konfiguration den gravimetrischen Trenntischen zugewiesen sind, können entsprechend der weiter oben beschriebenen Konfiguration, bei der $P = 2^n$ Endprodukte erzeugt werden, bestimmt werden; allerdings mit der folgenden Maßgabe: wird einem bestimmten gravimetrischen Trenntisch eine (Teil-)Fraktion mit $q$ zu trennenden Komponenten zugeführt, wobei $q$ eine ungerade Zahl ist, so wird ihm in der betrachteten Konfiguration zweckmäßigerweise eine Trenndichte zugewiesen, die so bestimmt ist, dass eine von dem gravimetrischen Trenntisch erzeugte Teilfraktion die $(q-1)/2$ leichteren Komponenten, die andere erzeugte Teilfraktion die $(q + 1)/2$ schwereren Komponenten enthält (oder umgekehrt).

Zweckmäßigerweise weisen die zugewiesenen Trenndichten einer bestimmten Stufe für alle $m$ Kaskaden dieselben Werte auf. Wenn jede Kaskade n gravimetrische Trenntische aufweist, d.h., wenn von einer Stufe zur nächsten pro Kaskade jeweils nur eine Teilfraktion einem gravimetrischen Trenntisch zugeführt wird, so haben alle gravimetrischen Trenntische einer Stufe dieselben Trenndichten zugewiesen bekommen. Befinden sich pro Kaskade und pro Stufe mehr als ein gravimetrischer Trenntisch, so ist diese zweckmäßige Ausgestaltung so zu verstehen, dass die gravimetrischen Trenntische einer Stufe einer bestimmten Kaskade zwar unterschiedliche Trenndichten zugewiesen bekommen haben können, die gravimetrischen Trenntische derselben Stufe der anderen Kaskaden dann aber auch dieselben Trenndichten zugewiesen bekommen, wie die gravimetrischen Trenntisch dieser Stufe der bestimmten Kaskade.

Es ist zweckmäßig, wenn die Endprodukte, d.h., die Teilfraktionen, die nach Durchlaufen der Fraktionen durch die Kaskadenstruktur bzw. die die Kaskadenstruktur umfassenden Baumstruktur von gravimetrischen Trenntischen erzeugt werden, gesammelt und/oder weiter- oder abtransportiert werden.

Es ist von Vorteil, wenn das System weiter eine Fördereinheit mit einer Vielzahl von Förderaggregaten umfasst, wobei innerhalb jeder Kaskade jeder gravimetrische Trenntisch einer Stufe mit einem gravimetrischen Trenntisch der vorhergehenden Stufe jeweils mit einem Förderaggregat derart gekoppelt ist, dass eine erste Teilfraktion oder eine zweite Teilfraktion der vorhergehenden Stufe über das Förderaggregat dem gravimetrischen Trenntisch der betrachteten Stufe zuführbar ist. Zweckmäßigerweise umfassen die Förderaggregate zugehörige Förderbänder.

Durch den Einsatz der Fördereinheit mit Förderaggregaten kann auf den Einsatz von manuellen Lesestationen verzichten werden, und ein weitgehend automatisiertes System zur Verfügung gestellt werden.

Vorzugsweise umfasst das System weiter eine Brech-Einheit, die ausgebildet ist zum Zerkleinern der Partikeln des Stoffgemischs, wobei die Brech-Einheit derart mit der Fraktionierungs-Einheit gekoppelt ist, dass das zerkleinerte Stoffgemisch der Fraktionierungs-Einheit zuführbar ist. Vorzugsweise umfasst die Brech-Einheit einen oder mehrere Backenbrecher (engl. Jaw Crusher) und/oder einen oder mehrere Prall-Brecher (engl. Impact Crusher). Es ist zweckmäßig, wenn die Brech-Einheit weiter derart mit der Fraktionierungs-Einheit gekoppelt ist, dass Partikeln des Stoffgemischs, die eine bestimmte vorgegebene Größe übersteigen, von der Fraktionierungs-Einheit wieder in die Brech-Einheit zurückführbar sind. Durch die Rückführung der Partikeln, die eine vorgegebene Größe übersteigen, wird sichergestellt, dass nur Partikeln in die nachfolgende weitere Aufbereitung und Sortierung gehen, die einer vorgegebenen (möglichst engen) Größenverteilung der $m$ Fraktionen entsprechen.

Zweckmäßigerweise umfasst das System weiter einen Scheider zum Abtrennen von Metallteilen aus dem Stoffgemisch, wobei der Scheider mit der Brech-Einheit derart gekoppelt ist, dass das von den Metallteilen befreite Stoffgemisch vom Scheider der Brech-Einheit zuführbar ist. Es ist von Vorteil, wenn mit dem Scheider ferro-magnetische Metallteile aus dem Stoffgemisch abtrennbar sind. Der Scheider kann dazu beispielsweise als Magnetscheider oder Überbandmagnetscheider ausgestaltet sein. Es ist erfindungsgemäß jedoch auch möglich, dass, ggf. zusätzlich, ein Scheider für nichtmagnetische Metalle zum Einsatz kommt.

Durch die Zerkleinerung der Partikeln und die damit meist eintretende Trennung der Stoffe voneinander wird die Sortierung der im Stoffgemisch enthaltenen Materialien im weiteren Prozessverlauf erleichtert, weil die vorher vorhandene Misch-Dichte der Partikeln aus zwei oder mehreren Stoffen in Richtung der Dichte der jeweils reinen Stoffe verändert wird.

Es ist von Vorteil, wenn die Fraktionierungs-Einheit eine oder mehrere Siebmaschinen umfasst. Durch die Siebung können Fraktionen mit einer für die nachfolgende Sortierung mittels gravimetrischen Trenntischen optimal engen Größenverteilung, speziell Korngrößenverteilung, hergestellt werden. Vorzugsweise handelt es sich bei den Siebmaschinen um Sizer mit zur Waagerechten schräg angeordneten Siebbelägen. Diese haben den Vorteil, dass sie weitgehend unempfindlich gegen Verschmutzungen und Verstopfungen sind und bevorzugt grobe Materialien bei hohen Feststoffdurchsätzen sieben können.

Darüber hinaus ist es erfindungsgemäß möglich, vor und nach den gravimetrischen Trenntischen, sowie gegebenenfalls zwischen den einzelnen Stufen mittels der gravimetrischen Trenntische eine Anzahl von anderen Aufbereitungsstufen vorzusehen, wie z.B. Siebmaschinen, Brech-Einheiten, Brecher, Magnetscheider bis hin zu optoelektronischen Sortierern (im nahen Infrarot (NIR) betriebene und andere).

Gemäß einem zweiten Aspekt der Erfindung wird eine Anlage zur Aufbereitung und/oder zum Recycling von Baureststoffen und/oder Abbruchmaterialien bereitgestellt, die das System gemäß dem ersten Aspekt der Erfindung umfasst, wobei die Baureststoffe und/oder Abbruchmaterialien als Stoffgemisch vorliegen.

Ein dritter Aspekt der Erfindung betrifft die Verwendung des Systems gemäß dem ersten Aspekt der Erfindung oder der Anlage gemäß dem zweiten Aspekt der Erfindung zur Aufbereitung und/oder zum Recycling von Baureststoffen und/oder Abbruchmaterialien, wobei die Baureststoffe und/oder Abbruchmaterialien als Stoffgemisch vorliegen.

Aus dem Stand der Technik ist unter anderem nicht bekannt, gravimetrische Trenntische, insbesondere trockene gravimetrische Trenntische, für die Aufbereitung und/oder das Recycling von Baureststoffen und/oder Abbruchmaterialien zu verwenden, weil diese Trenntische nach dem Verständnis des Stands der Technik die Gemische stark unterschiedlicher Baustoffe nicht selektiv genug trennen können. Durch das erfindungsgemäße System wird dieses Problem, wie vorstehend ausführlich dargelegt, gelöst.

Gemäß einem vierten Aspekt der Erfindung wird ein Verfahren zur gravimetrischen Sortierung eines Stoffgemischs bereitgestellt, das die folgenden Schritte umfasst:

- Aufteilen des Stoffgemischs in mindestens $m$, m≥1, Fraktionen, wobei jede Fraktion Partikeln einer vorgegebenen Größenverteilung enthält;
- für jede Fraktion einer Auswahl von $m$ der mindestens m Fraktionen:

  - Trennen der Partikeln der Fraktion mithilfe eines gravimetrischen Trenntischs einer ersten Stufe in eine erste Teilfraktion der ersten Stufe mit Partikeln mit einer Dichte unterhalb einer, dem gravimetrischen Trenntisch zugewiesenen Trenndichte und in eine zweite Teilfraktion der ersten Stufe mit Partikeln mit einer Dichte oberhalb der zugewiesenen Trenndichte;
  - für $k = 1$ bis $k = n-1, n≥1$, Wiederholen der folgenden Schritte, um Teilfraktionen der Stufe $n$ zu erzeugen:

    (i) Transportieren eines Teils oder sämtlicher in Stufe $k$ erzeugten Teilfraktionen zu gravimetrischen Trenntischen der Stufe $k + 1$, wobei jedem gravimetrischen Trenntisch der Stufe $k + 1$ eine transportierte Teilfraktion zugeordnet wird, und jedem gravimetrischen Trenntisch eine Trenndichte zugewiesen ist,
(ii) Trennen einer jeden der zu den gravimetrischen Trenntischen der Stufe $k + 1$ transportierten Teilfraktionen mithilfe des ihr zugeordneten gravimetrischen Trenntischs in zwei weitere Teilfraktionen, wobei die erste Teilfraktion Partikeln mit einer Dichte unterhalb der dem gravimetrischen Trenntisch zugewiesenen Trenndichte aufweist und die zweite Teilfraktion Partikeln mit einer Dichte oberhalb der zugewiesenen Trenndichte aufweist.

Bei dem Stoffgemisch handelt es typischerweise um Baureststoffe und/oder Abbruchmaterialien.

Das Verfahren wird besonders bevorzugt bei der Aufbereitung und/oder zum Recycling -von Baureststoffen und/oder Abbruchmaterialien, wobei die Baureststoffe und/oder Abbruchmaterialien als Stoffgemisch vorliegen, eingesetzt.

Bei den erfindungsgemäßen gravimetrischen Trenntischen handelt es sich um gravimetrische Trenntische, die zur trockenen gravimetrischen Sortierung eingesetzt werden.

Für die Beschreibung der Funktionsweise und zweckmäßiger Ausgestaltungen der in dem Verfahren eingesetzten gravimetrischen Trenntische wird auf die Ausführungen zum ersten Aspekt der Erfindung verwiesen.

Bevorzugt ist $m > 1$ oder auch $m \geq 3$. Besonders bevorzugt gilt $n \cdot m > 1$; dies bedeutet, dass entweder mehr als eine Kaskade oder mehr als ein gravimetrischer Trenntisch pro Kaskade vorhanden ist. Bevorzugt ist $n > 1$. Für den Fall $n = 1$ endet das Verfahren nach der ersten Stufe. Die Wiederholung der angegebenen Schritte entfällt dann.

Das Verfahren gemäß dem vierten Aspekt der Erfindung umfasst Schritte, die bereits oben im Zusammenhang mit dem System des ersten Aspekts der Erfindung beschrieben wurden. Insofern gelten die dortigen Ausführungen, soweit hier anwendbar, entsprechend.

Speziell soll aber erwähnt werden, dass durch das Aufteilen des Stoffgemischs in mindestens $m, m > 1$, Fraktionen, wobei jede Fraktion Partikeln einer vorgegebenen Größenverteilung enthält, der Vorteil erreicht wird, dass jedem gravimetrischen Trenntisch der ersten Stufe jeweils Partikeln zugeführt werden, die sich in einem bestimmten vorgegebenen, möglichst engen, bzw. praktisch sinnvollen Größenbereich befinden. Bevorzugt erfolgt die Fraktionierung nach der Korngröße der Partikeln. Spezieller Zweck der Aufteilung des Stoffgemischs in Fraktionen nach der Größenverteilung der Partikeln gemäß dem ersten Schritt des erfindungsgemäßen Verfahrens und der Zuführung der Fraktionen an unterschiedliche gravimetrische Trenntische gemäß Schritten (i) und (ii) ist eine präzisere Trennung der Partikeln nach ihrer Dichte. Wie zum ersten Aspekt der Erfindung bereits ausgeführt, ist der Grund dafür, dass kleine, schwere Partikeln ein ähnliches Fluidisierungs- oder Sinkverhalten in Luft aufweisen können wie größere, leichte Partikeln. Das bedeutet, dass ohne die Fraktionierung des Stoffgemischs anhand der Größe der Partikeln gemäß dem ersten Verfahrensschritt die Güte der Sortierung nach der Dichte mithilfe von gravimetrischen Trenntischen schlecht sein kann. In anderen Worten, vorteilhafterweise werden die (Korn)größenverteilungen der einzelnen Fraktionen des Stoffgemischs derart gewählt, dass die Partikeln nicht nach dem Gewicht der Einzelpartikeln sortiert werden, sondern tatsächlich nach der Dichte der die Partikeln bildenden Stoffe. Ein weiterer Vorteil der Erfindung besteht damit also darin, dass aufgrund der Fraktionierung des *Stoffgemischs* die Sortierung nach der Dichte der einzelnen Partikeln durch jeden gravimetrischen Trenntisch sehr präzise erfolgen kann.

Die Verfahrensschritte werden für jede Fraktion der Auswahl von $m$ der mindestens $m$ Fraktionen durchgeführt; mit anderen Worten bedeutet dies, dass die Verfahrensschritte für jede Kaskade von $m$ Kaskaden von gravimetrischen Trenntischen durchlaufen werden, wobei jede Kaskade mindestens zwei gravimetrische Trenntische umfasst. Man kann auch sagen, dass jede Kaskade mindestens zwei Stufen umfasst. Zum Verständnis von "Kaskade" wird auf die Ausführungen zum ersten Aspekt der Erfindung verwiesen.

Es ist zweckmäßig, wenn die zugewiesenen Trenndichten einer bestimmten Stufe für alle $m$ Kaskaden dieselben Werte aufweisen. Zum Verständnis dieser Ausgestaltung wird auf die Ausführungen zum ersten Aspekt der Erfindung verwiesen.

Dadurch, dass jede Fraktion die Sortierung durch mindestens zwei gravimetrische Trenntische einer Kaskade durchläuft, wird gewährleistet, dass die einzelnen Bestandteile bzw. Partikeln präzise anhand ihrer Dichten separiert werden können.

Die erfindungsgemäße Kombination von Fraktionierung und einer mithilfe von parallelen in Kaskaden angeordneten gravimetrischen Trenntischen ermöglicht damit ein (nahezu) sortenreines Trennen des Stoffgemischs in die jeweiligen Komponenten. Erfindungsgemäß ist es auch, wenn die Komponenten Produktklassen aus verschiedenen Stoffen oder, Stoffgemischen enthalten, die speziell ihrer Dichte gemäß alle für die weitere Verwendung bzw. Wiederverwendung zur Herstellung z.B. von neuem Beton hoher Qualität geeignet sind.

Das Verfahren hat den weiteren Vorteil, dass aufgrund der Benutzung der gravimetrischen Trenntische auf den Einsatz von Wasser bei der Aufbereitung verzichtet werden kann. Die Baureststoffe und/oder Abbruchmaterialien werden nicht unnötig befeuchtet. Eine nachfolgend möglicherweise erforderliche Trocknung der Stoffe wird vermieden.

Durch jede Wiederholung der Schritte (i) und (ii) wird einer Kaskade eine weitere Stufe von gravimetrischen Trenntischen, sprich, von Sortiervorgängen, hinzugefügt. Innerhalb einer Kaskade wird dann von einer Stufe zur nächsten jeweils ein Teil oder auch sämtliche der erzeugten Teilfraktionen transportiert.

Jede weitere Stufe der Kaskade ermöglicht eine weitere, feinere Eingrenzung eines Dichtebereichs. Wird beispielsweise einem gravimetrischen Trenntisch der $i$-ten Stufe, $1 \le i \le n$, in der $j$-ten Kaskade, $1 \le j \le m$, ein Stoffgemisch mit Partikeln, deren Dichte p sich im Dichtebereich $(\rho_{i-1,j}^{(1)}; \rho_{i-1,j}^{(2)})$ befindet (d.h. $\rho_{i-1,j}^{(1)} \le \rho \le \rho_{i-1,j}^{(2)}$, zugeführt, so ist es zweckmäßig, dass diesem gravimetrischen Trenntisch der Stufe $i$ und Kaskade $j$ eine Trenndichte, $\rho_{i,j}^{(0)}$, aus dem Bereich $(\rho_{i-1,j}^{(1)}; \rho_{i-1,j}^{(2)})$ zugewiesen wird, d.h. $\rho_{i-1,j}^{(1)} \le \rho_{i,j}^{(0)} \le \rho_{i-1,j}^{(2)}$. Denn dann erzeugt der gravimetrische Trenntisch der $i$-ten Stufe der $j$-ten Kaskade eine erste Teilfraktion mit Partikeln, deren Dichte im Bereich $(\rho_{i-1,j}^{(1)}; \rho_{i,j}^{(0)})$ liegt, und eine zweite Teilfraktion mit Partikeln, deren Dichte im Bereich $(\rho_{i,j}^{(0)}; \rho_{i-1,j}^{(2)})$ liegt. Die so erzeugte erste Teilfraktion kann auch als Leichtfraktion des gravimetrischen Trenntischs der $i$-ten Stufe der $j$-ten Kaskade aufgefasst werden; die so erzeugte zweite Teilfraktion als dessen Schwerfraktion. Es ist zu beachten, dass die Trennung in Dichtebereiche nur bis zu einer gewissen technisch bedingten Güte erfolgen kann, wie bereits zum ersten Aspekt der Erfindung beschrieben.

Es versteht sich von selbst, dass die Grenzen der Dichtebereiche $(\rho_{i,j}^{(1)}; \rho_{i,j}^{(2)})$ nach unten auch durch Null, d.h. $\rho_{i,j}^{(1)} = 0$, und/oder nach oben unbeschränkt, d.h. $\rho_{i,j}^{(2)} \to \infty$, sein können. Zum Beispiel kann bei den den gravimetrischen Trenntischen der ersten Stufe zugeführten Fraktionen u.U. angenommen werden, dass die enthaltenen Partikeln eine beliebige Dichte haben können, sodass in diesem Fall der Dichtebereich jeweils von 0 bis unendlich reichen würde.

Je mehr gravimetrische Trenntische in einer Kaskade eingesetzt werden, desto enger wird der Dichtebereich, und desto weniger Stoffe bzw. Materialen wird die zugehörige Teilfraktion enthalten. In anderen Worten, das erfindungsgemäße Verfahren ermöglicht eine Trennung von Partikeln auch dann, wenn die Dichtunterschiede der zu trennenden (Teil-)Fraktion nur sehr gering sind.

Die vorstehenden Ausführungen zu Bestimmung der vorgegebenen Dichte lassen sich auf das System gemäß dem ersten Aspekt der Erfindung, die Anlage gemäß dem zweiten Aspekt der Erfindung sowie die Verwendung gemäß dem dritten Aspekt der Erfindung entsprechend anwenden.

Darüber hinaus ermöglicht das erfindungsgemäße Verfahren eine hohe Durchsatzleistung und verbraucht wenig Energie.

Es kann vorteilhaft sein, wenn in zumindest einer oder auch in jeder Kaskade für jedes $k$ jeweils nur genau eine der in der Stufe $k$ erzeugten Teilfraktionen zu einem zugeordneten gravimetrischen Trenntisch der Stufe $k + 1$ transportiert und von diesem getrennt wird. In diesem Fall wird durch den der nächsten Stufe der betrachteten Kaskade zugeordneten gravimetrischen Trenntisch dann die ihm zugeführte Teilfraktion wieder in zwei Teilfraktionen getrennt, wobei nur eine der beiden Teilfraktionen wieder an einen weiteren gravimetrischen Trenntisch innerhalb derselben Kaskade transportiert wird.

Erfindungsgemäß ist auch, wenn innerhalb einer Kaskade für jede Stufe stets nur die erste Teilfraktion bzw. Leichtfraktion einer bestimmten Stufe dem gravimetrischen Trenntisch der darauffolgenden Stufe zugeführt wird. In diesem Fall ist es ausreichend, pro Kaskade und Stufe genau einen gravimetrischen Trenntisch vorzusehen. Das heißt, von den beiden Teilfraktionen, die der gravimetrische Trenntisch der bestimmten Stufe der Kaskade erzeugt, wird innerhalb der Kaskade stets jene Teilfraktion dem gravimetrischen Trenntisch der darauffolgenden Stufe der Kaskade zugeführt, die Partikeln mit einer Dichte kleiner als die dem gravimetrischen Trenntisch der bestimmten Stufe zugewiesene Trenndichte enthält. In diesem Fall braucht zweckmäßigerweise keine der jeweiligen zweiten Teilfraktionen bzw. Schwerfraktionen einem weiteren gravimetrischen Trenntisch zugeführt zu werden, sondern kann etwa als Endprodukt zum Sammeln in einem Behälter abtransportiert werden. Für diesen Fall wird vorteilhafterweise die dem gravimetrischen Trenntisch der ersten Stufe zugewiesene Trenndichte derart gewählt, dass dessen Schwerfraktion lediglich Partikeln eines Materials, d.h., des Stoffes mit der größten Dichte, enthält. Dann enthält die Leichtfraktion ein Stoffgemisch aus Partikeln der übrigen in der ursprünglichen Fraktion enthaltenen Materialien bzw. Stoffen. Dadurch kann in der ersten Stufe bereits ein Endprodukt erzeugt werden, das (fast ausschließlich) Partikeln des genannten schweren Materials enthält. Die Trenndichte, die dem gravimetrischen Trenritisch der zweiten Stufe zugewiesen wird, wird zweckmäßig derart gewählt, dass in Bezug auf die ihm zugeführte Teilfraktion wieder nur der schwerste Stoff als Schwerfraktion abgetrennt wird. Damit kann erreicht werden, dass der zweitschwerste Stoff der in der ursprünglichen Fraktion enthaltenen Materialien bereits in der zweiten Stufe als Endprodukt abgetrennt bzw. erhalten wird. Dieses Prozedere für die Wahl der Trenndichten wird von Stufe zu Stufe wiederholt. Damit können pro Stufe Partikeln eines bestimmten Materials als Endmaterial abgetrennt werden. Zweckmäßig werden in der letzten Stufe die letzten beiden verbliebenen Stoffe des Stoffgemischs voneinander getrennt; was allerdings aufgrund der Materialeigenschaften nicht immer möglich sein muss, sodass anderweitige Trennschritte angewandt werden müssten, falls eine weitere Trennung überhaupt nötig ist.

Erfindungsgemäß ist auch, wenn innerhalb einer Kaskade für jede Stufe stets nur die zweite Teilfraktion bzw. die Schwerfraktion der einen Stufe dem gravimetrischen Trenntisch der darauffolgenden Stufe zugeführt wird. In diesem Fall ist es ausreichend, pro Kaskade und Stufe genau einen gravimetrischen Trenntisch vorzusehen. Das heißt, von den beiden Teilfraktionen, die der gravimetrische Trenntisch der bestimmten Stufe der Kaskade erzeugt, wird innerhalb der Kaskade stets jene Teilfraktion dem gravimetrischen Trenntisch der darauffolgenden Stufe der Kaskade zugeführt, die Partikeln mit einer Dichte größer als die dem gravimetrischen Trenntisch der bestimmten Stufe zugewiesene Trenndichte enthält. In diesem Fall braucht zweckmäßigerweise keine der jeweiligen ersten Teilfraktionen bzw. Leichtfraktionen einem weiteren gravimetrischen Trenntisch zugeführt zu werden, sondern kann etwa als Endprodukt zum Sammeln in einem Behälter abtransportiert werden. Für diesen Fall wird vorteilhafterweise die dem gravimetrischen Trenntisch der ersten Stufe zugewiesene Trenndichte derart gewählt, dass dessen Leichtfraktion lediglich Partikeln eines Materials, d.h., des Stoffes mit der geringsten Dichte, enthält. Dann enthält die Schwerfraktion ein Stoffgemisch aus Partikeln der übrigen in der ursprünglichen Fraktion enthaltenen Materialien bzw. Stoffen. Dadurch kann in der ersten Stufe bereits ein Endprodukt erzeugt werden, das (fast ausschließlich) Partikeln des genannten leichten Materials enthält. Die Trenndichte, die dem gravimetrischen Trenntisch der zweiten Stufe zugewiesen wird, wird zweckmäßig derart gewählt, dass in Bezug auf die ihm zugeführte Teilfraktion wieder nur der leichteste Stoff als Leichtfraktion abgetrennt wird. Damit kann erreicht werden, dass der zweitleichteste Stoff der in der ursprünglichen Fraktion enthaltenen Materialien bereits in der zweiten Stufe als Endprodukt abgetrennt bzw. erhalten wird. Dieses Prozedere für die Wahl der Trenndichten wird von Stufe zu Stufe wiederholt. Damit können pro Stufe Partikeln eines bestimmten Materials als Endmaterial abgetrennt werden. Zweckmäßig werden in der letzten Stufe die letzten beiden verbliebenen Stoffe des Stoffgemischs voneinander getrennt; was allerdings aufgrund der Materialeigenschaften nicht immer möglich sein muss, sodass anderweitige Trennschritte angewandt werden müssten. Die soeben beschriebene Ausgestaltung ist vorzugswürdig, weil Partikeln mit geringerer Dichte schwer im gravimetrischen Trenntisch zu halten sind. Leichte Materialien wie Folien, Papier, Holzspäne, etc. neigen zum Wegfliegen. Daher ist es sinnvoll, diese bereits in der ersten bzw. in einer der ersten Stufen abzutrennen.

Die vorstehend genannten Überlegungen gelten für das System gemäß dem ersten Aspekt der Erfindung, insbesondere für die dort beschriebenen zugewiesenen Trenndichten, entsprechend.

Vorteilhaft ist auch, wenn für zumindest ein $k$ mindestens zwei der in der Stufe $k$ erzeugten Teilfraktionen zu jeweils zugeordneten gravimetrischen Trenntischen der Stufe $k + 1$ transportiert und von diesen getrennt werden.

Besonders bevorzugt ist, wenn für zumindest eine Fraktion für jedes $k$ jeweils sämtliche der in der Stufe $k$ erzeugten Teilfraktionen zu zugeordneten gravimetrischen Trenntischen der Stufe $k + 1$ transportiert und von diesen getrennt werden.

Die vorstehend genannten erfindungsgemäßen Ausgestaltungen erzeugen die bereits im Zusammenhang mit dem ersten Aspekt der Erfindung beschriebene Baumstruktur. Für die besagte Baumstruktur, die im Zusammenhang mit der Ausführung des erfindungsgemäßen Verfahrens durchlaufen werden kann, gelten die Ausführungen zum ersten Aspekt der Erfindung entsprechend und finden auch hier Anwendung.

Zweckmäßig kann sein, dass die nicht von einem zugeordneten gravimetrischen Trenntisch zu einem weiteren gravimetrischen Trenntisch transportierte Teilfraktion mithilfe von Förderbändern abtransportiert und in entsprechenden Behältern gesammelt wird.

Es ist zweckmäßig, wenn die Endprodukte, d.h., die Teilfraktionen, die nach Durchlaufen der Fraktionen durch die Kaskadenstruktur bzw. die die Kaskadenstruktur umfassende Baumstruktur von gravimetrischen Trenntischen, gesammelt und/oder weiter- oder abtransportiert werden.

Erfindungsgemäß ist es auch, wenn das Transportieren der Teilfraktionen von einem gravimetrischen Trenntisch einer Stufe zum gravimetrischen Trenntisch der nächsten Stufe innerhalb einer Kaskade manuell erfolgt.

Zweckmäßig ist aber, wenn der Schritt des Transportierens der Teilfraktionen den Einsatz einer Fördereinheit, die ein oder mehrere Förderaggregate umfasst, beinhaltet. Zweckmäßigerweise umfassen die Förderaggregate zugehörige Förderbänder.

Durch den Einsatz der Fördereinheit mit Förderaggregaten kann auf den Einsatz von manuellen Lesestationen verzichtet werden, und ein weitgehend automatisiertes System zur Verfügung gestellt werden. Die Erfindung ermöglicht das Brechen der Baureststoffe und/oder Abbruchmaterialien inklusive vieler enthaltener Komponenten auf die beschriebenen Kornbereiche, wonach diese unerwünschten Stoffe maschinell entfernt werden können. Dadurch sinkt der Aufwand auf der Baustelle bzw. Abbruchstelle für die Vorbereitung der Stoffgemische.

Bevorzugt umfasst das Verfahren vor dem Schritt des Aufteilens des Stoffgemischs in mindestens $m$ Fraktionen den folgenden Schritt:

- Zerkleinern der Partikeln des Stoffgemischs mithilfe einer oder mehrerer Brech-Einheiten.

Zweckmäßigerweise umfasst das Verfahren weiter den folgenden Schritt:

- nach dem Zerkleinern Zurückführen zur Brech-Einheit von Partikeln, deren Größe keiner der Größenverteilung der $m$ Fraktionen entspricht.

Weiter ist von Vorteil, wenn das Verfahren weiter den folgenden Schritt umfasst:

- vor dem Zerkleinern des Stoffgemischs Abtrennen von Metallteilen aus dem Stoffgemisch und
- anschließend Zerkleinern des von den Metallteilen befreiten Stoffgemischs.

Vorteile und weitere Ausgestaltungen zu den letzten vorteilhaften Schritten ergeben sich entsprechend den Ausführungen zum ersten Aspekt der Erfindung.

Besonders bevorzugt wird das vorstehend genannte Verfahren des vierten Aspekts der Erfindung bei der Aufbereitung und/oder beim Recycling von Baureststoffen und/oder Abbruchmaterialien verwendet. Das heißt, in diesem Fall handelt es sich um ein Verfahren zur Aufbereitung und/oder zum Recycling von Baureststoffen und/oder Abbruchmaterialien, wobei die Baureststoffe und/oder Abbruchmaterialien als Stoffgemisch vorliegen; das Verfahren umfasst dieselben Schritte wie das vorstehend beschriebene Verfahren gemäß dem vierten Aspekt der Erfindung. Die zweckmäßigen und vorteilhaften Ausgestaltungen des Verfahrens gemäß dem vierten Aspekt der Erfindung finden auch im Verfahren zur Aufbereitung und/oder zum Recycling von Baureststoffen und/oder Abbruchmaterialien entsprechende Anwendung.

Im Folgenden werden bevorzugte Ausführungsbeispiele der vorliegenden Erfindung anhand der nachfolgenden Figuren beschrieben. Es zeigen:

Figur 1: eine schematische Darstellung eines erfindungsgemäßen Systems zur gravimetrischen Sortierung eines Stoffgemischs mithilfe von gravimetrischen Trenntischen, wobei jeweils die Schwerfraktionen innerhalb einer Kaskade von einem gravimetrischen Trenntisch zum nächsten weitertransportiert werden;

Figur 2: eine schematische Darstellung eines weiteren erfindungsgemäßen Systems zur gravimetrischen Sortierung eines Stoffgemischs mithilfe von gravimetrischen Trenntischen, wobei jeweils die Leichtfraktionen innerhalb einer Kaskade von einem gravimetrischen Trenntisch zum nächsten weitertransportiert werden;

Figur 3: eine schematische Darstellung eines weiteren erfindungsgemäßen Systems zur gravimetrischen Sortierung eines Stoffgemischs mithilfe von in einer Baumstruktur angeordneten gravimetrischen Trenntischen;

Figur 4: einen gravimetrischen Trenntisch, der in einem erfindungsgemäßen System oder einer erfindungsgemäßen Anlage eingesetzt werden kann;

Figur 5: einen Ausschnitt aus einer erfindungsgemäßen Anlage zur Aufbereitung und/oder zum Recycling von Baureststoffen und/oder Abbruchmaterialien.

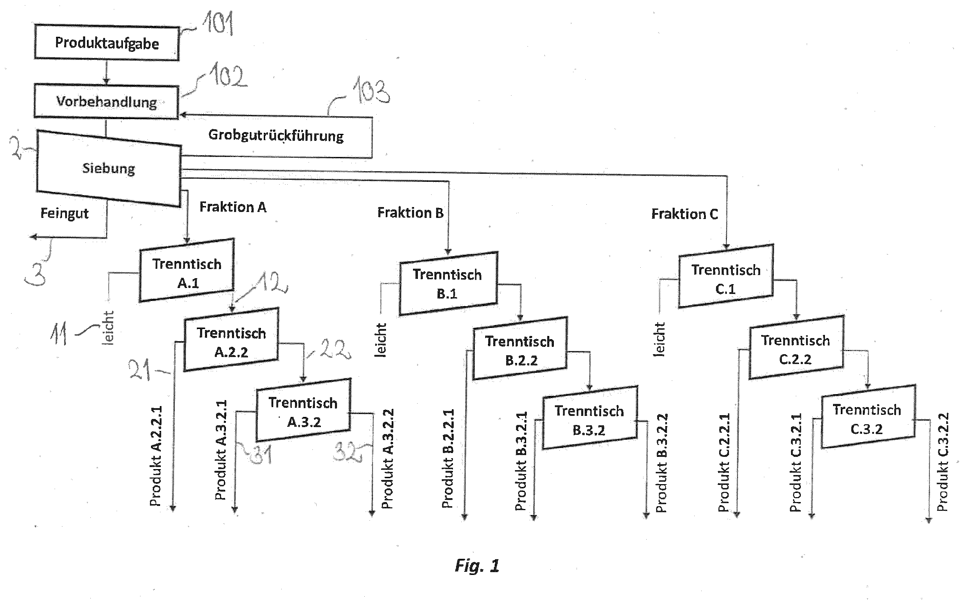

In Figur 1 ist eine Ausführungsform eines erfindungsgemäßen Systems zur gravimetrischen Sortierung eines Stoffgemischs gezeigt. Dieses System kann vorzugsweise in einer Anlage zur Aufbereitung und/oder zum Recycling von Baureststoffen und/oder Abbruchmaterialien eingesetzt werden. Die Baureststoffe und/oder Abbruchmaterialien liegen in Form eines Stoffgemischs vor. Beispielsweise handelt es sich bei den Baureststoffen oder Abbruchmaterialien um Stoffe wie Kunststoffe, Holz, Gips, Glas, Ton, Beton, Kies, Steine, Schotter und/oder Metall etc., typischerweise vorliegend in Teilen oder Stücken von unterschiedlichsten Größen. Nach der Aufgabe der Baureststoffe und/oder Abbruchmaterialien in der Produktaufgabe 101 und einer gegebenenfalls erfolgten Vorbehandlung 102, etwa durch Magnetscheider zum Abtrennen von magnetischen Materialien wie Metalle, oder durch eine Brech-Einheit zum Zerkleinern der Partikeln, die weiter unten noch näher beschrieben werden, werden die Baureststoffe und/oder Abbruchmaterialien einer Fraktionierungs-Einheit 2 zugeführt. Bei der Fraktionierungs-Einheit 2 kann es sich um eine oder mehrere Siebmaschinen, bevorzugt Sizer, handeln. Die Fraktionierungs-Einheit 2 erzeugt eine bestimmte Anzahl von Fraktionen. In Figur 1 ist gezeigt, dass mithilfe der Fraktionierungs-Einheit 2 die drei Fraktionen A, B und C erzeugt werden. Jede der Fraktionen A, B und C enthält Partikeln mit einer vorgegebenen Größenverteilung. Zweckmäßigerweise werden die Partikeln nach ihrer Korngröße sortiert. Vorzugsweise überlappen sich die Korngrößen der einzelnen Partikeln nicht. Darüber hinaus wird noch Feingut 3 erzeugt. Bei Feingut 3 handelt es sich um Partikeln mit einer Korngröße unterhalb eines bestimmten Grenzdurchmessers, typischerweise liegt dieser Grenzdurchmesser bei 1 mm. In der Fraktionierungs-Einheit 2 anfallendes Feingut 3 wird zweckmäßigerweise ohne weitere Sortierung abgeführt. Dieses Feingut 3 setzt sich vorwiegend aus Sanden und anorganischen und organischen Stäuben zusammen, über deren Verwendung als Baustoff optional entschieden werden kann.

Teile der Baureststoffe und/oder Abbruchmaterialien bzw. Komponenten des Stoffgemischs, deren (Korn-)Größe eine gewisse Maximalgröße (z.B. 32 mm) überschreitet, sog. Grobgut, können über die optionale Grobgutrückführung 103 von der Fraktionierungs-Einheit 2 zur weiteren Vorbehandlung / Zerkleinerung, zurückgeführt werden. Durch die Kombination aus Vorbehandlung 102 und Fraktionierungs-Einheit 2 mit Grobgutrückführung 103 wird sichergestellt, dass nur Partikeln mit (Korn-)Größe unterhalb der gewissen Maximalgröße in die nachfolgende weitere Aufbereitung und Sortierung gehen.

Jede der Fraktionen wird einer Kaskade von gravimetrischen Trenntischen zugeführt. In dem konkreten Ausführungsbeispiel von Figur 1 heißt dies, dass die gravimetrischen Trenntische A.1, A.2.2 und A.3.2 eine erste Kaskade von gravimetrischen Trenntischen bilden; diese erste Kaskade ist der Fraktion A zugeordnet. Des Weiteren bilden die gravimetrischen Trenntische B.1, B.2.2 und B.3.2 eine zweite Kaskade von gravimetrischen Trenntischen, die der Fraktion B zugeordnet ist. Schließlich bilden die gravimetrischen Trenntische C.1, C.2.2 und C.3.2 eine dritte Kaskade von gravimetrischen Trenntischen, die der Fraktion C zugeordnet ist.

Die gravimetrischen Trenntische A.1, B.1 und C.1 sind dabei allesamt gravimetrische Trenntische der ersten Stufe; die gravimetrischen Trenntische A.2.2, B.2.2 und C.2.2 sind gravimetrische Trenntische der zweiten Stufe; die gravimetrischen Trenntische A.3.2, B.3.2 und C.3.2 sind gravimetrische Trenntische der dritten Stufe. Die Stufe *i* gibt dabei an, dass die dem gravimetrischen Trenntisch der Stufe *i* zugeführte (Teil-)Fraktion bereits durch *i* - 1 vorhergegangene gravimetrische Trenntische innerhalb der Kaskade sortiert wurde.

Es versteht sich von selbst, dass die in Figur 1 gezeigte Anzahl von Fraktionen (drei) und die Anzahl der gravimetrischen Trenntische pro Fraktion (ebenfalls drei) rein der Veranschaulichung der Erfindung dient und nicht einschränkend zu verstehen ist.

Der Fraktion A wird durch die Kaskade von gravimetrischen Trenntischen A.1, A.2.2 und A.3.2 sortiert. Die Sortierung mithilfe der gravimetrischen Trenntische erfolgt nach der Dichte der Partikeln. Für jeden gravimetrischen Trenntisch kann eine bestimmte Trenndichte vorgegebenen werden, nach der die Partikeln getrennt werden, sog. Trenndichte. Das heißt, ein gravimetrischer Trenntisch trennt Partikeln mit einer Dichte unterhalb der ihm zugewiesenen Trenndichte - sog. Leichtfraktion - von Partikeln mit einer Dichte oberhalb der zugewiesenen Trenndichte - sog. Schwerfraktion. Grundsätzlich kann die Trenndichte beliebig gewählt werden, sodass Komponenten auch mit einem geringen (relativen) Dichteunterschied ab 10 % voneinander getrennt werden können. Obwohl bau- und funktionsweiseabhängig die Leichtfraktion einen gewissen Anteil von Partikeln enthalten kann, die eine Dichte oberhalb der Trenndichte aufweisen, und die Schwerfraktion einen gewissen Anteil von Partikeln enthalten, die eine Dichte unterhalb der Trenndichte aufweisen kann, sind diese Anteile typischerweise geringer als 15 % der Masse der Leicht- bzw. Schwerfraktion.

In der in Figur 1 gezeigten Anordnung wird innerhalb jeder Kaskade die Schwerfraktion von einem gravimetrischen Trenntisch der einen Stufe zum gravimetrischen Trenntisch der darauffolgenden Stufe weitergegeben. Konkret wird das nachfolgend im Zusammenhang mit Fraktion A näher beschrieben. Für die Fraktionen B und C gilt Entsprechendes.

Die Fraktion A wird zunächst von der Fraktionierungs-Einheit 2 zum gravimetrischen Trenntisch A.1 transportiert; dazu kann beispielsweise ein Förderband eingesetzt werden. Die Fraktion A enthält ein Gemisch von Stoffen mit einer vorgegebenen Größenverteilung, etwa von 0 bis 3 mm oder 1 bis 3 mm. Der gravimetrische Trenntisch A.1 sortiert die ihm zugeführte Fraktion A in eine Leichtfraktion 11 und eine Schwerfraktion 12. Die Leichtfraktion 11 enthält (überwiegend) Partikeln mit einer Dichte unterhalb der für den gravimetrischen Trenntisch A.1 eingestellten Trenndichte und mit der bestimmten (Korn-)Größenverteilung. Die Leichtfraktion kann etwa abtransportiert und gesammelt werden; eine Sortierung der Leichtfraktion 11 mithilfe eines zusätzlichen gravimetrischen Trenntisches ist allerdings auch möglich. Wird die Trenndichte des gravimetrischen Trenntischs A.1 so eingestellt, dass lediglich Partikeln der leichtesten der zu trennenden Komponenten als Leichtfraktion 11 abgetrennt werden, so wird diese Leichtfraktion als Endprodukt gesammelt. Die Schwerfraktion 12 wird dem gravimetrischen Trenntisch A.2.2 der zweiten Stufe zugeführt. Dieser sortiert die Schwerfraktion 12 in eine weitere Leichtfraktion 21 und eine Schwerfraktion 22. Für den gravimetrischen Trenntisch A.2.2 ist eine bestimmte Trenndichte eingestellt, anhand derer die Partikeln der Leichtfraktion 21 von den Partikeln der Schwerfraktion 22 getrennt werden. Zweckmäßigerweise ist bei dem Ausführungsbeispiel der Figur 1 die dem gravimetrischen Trenntisch A.2.2 zugewiesene Trenndichte derart vorgegeben, dass sie zwischen der Dichte der leichtesten abzutrennenden Komponente der Schwerfraktion 12 und der Dichte der nächstschwereren Komponente der Schwerfraktion 12 liegt. Die Leichtfraktion 21 enthält dann (überwiegend) Partikeln der Komponente mit der geringsten Dichte in der Schwerfraktion 12. In anderen Worten, die Leichtfraktion 21 enthält Partikeln der zweitleichtesten Komponente in Fraktion A. Die Leichtfraktion 21 kann dann als Endprodukt A.2.2.1 gesammelt werden.

Die Schwerfraktion 22 wird dem gravimetrischen Trenntisch A.3.2 der dritten Stufe zugeführt. Dieser sortiert die Schwerfraktion 22 in eine weitere Leichtfraktion 31 und eine Schwerfraktion 32. Für den gravimetrischen Trenntisch A.3.2 ist eine weitere bestimmte Trenndichte eingestellt, anhand derer die Partikeln der Leichtfraktion 31 von den Partikeln der Schwerfraktion 32 getrennt werden. Zweckmäßigerweise ist bei dem Ausführungsbeispiel der Figur 1 die dem gravimetrischen Trenntisch A.3.2 zugewiesene Trenndichte derart vorgegeben, dass sie zwischen der Dichte der leichtesten Komponente der Schwerfraktion 22 und der Dichte der nächstschwereren Komponente der Schwerfraktion 22 liegt. Die Leichtfraktion 31 enthält dann (überwiegend) Partikeln der Komponente mit der geringsten Dichte in der Schwerfraktion 22. In anderen Worten, die Leichtfraktion 31 enthält Partikeln der drittleichtesten Komponente in Fraktion A. Die Leichtfraktion 21 kann dann als Endprodukt A.3.2.1 gesammelt werden.

In Figur 1 wird davon ausgegangen, dass Fraktion A vier zu trennende Komponenten enthält. Die Schwerfraktion 32 ist damit - nach den Leichtfraktionen 11, 21, 31) die letzte dieser Komponenten. Diese kann als Endprodukt A.3.2.2 gesammelt und abtransportiert werden.

Die Teilfraktionen 21 (Leichtfraktion des gravimetrischen Trenntischs A.2.2), 31 (Leichtfraktion des gravimetrischen Trenntischs A.3.2) und 32 (Schwerfraktion des gravimetrischen Trenntischs A.3.2) können als (End-)Produkte A.2.2.1, A.3.2.1 bzw. A.3.2.2 abtransportiert, gesammelt und/oder weiterverarbeitet werden.

Die Sortierung der Fraktionen B mithilfe der Trenntische B.1, B.2.2 und B.3.2 in (End-)Produkte B.2.2.1, B.3.2.1 und B.3.2.2 und C mithilfe der Trenntische C.1, C.2.2 und C.3.2 in (End-)Produkte C.2.2.1, C.3.2.1 und C.3.2.2 erfolgt analog zu der Sortierung der Fraktion A. Die vorgegebenen Dichten der gravimetrischen Trenntische in einer bestimmten Stufe können für alle Fraktionen bzw. Kaskaden identisch sein, dies ist erfindungsgemäß allerdings nicht zwingend erforderlich. Fraktion B kann z.B. Partikeln mit einer Korngrößenverteilung zwischen 3 mm und 9 mm enthalten, Fraktion C z.B. Partikeln mit einer Korngrößenverteilung zwischen 9 mm und 25 mm.

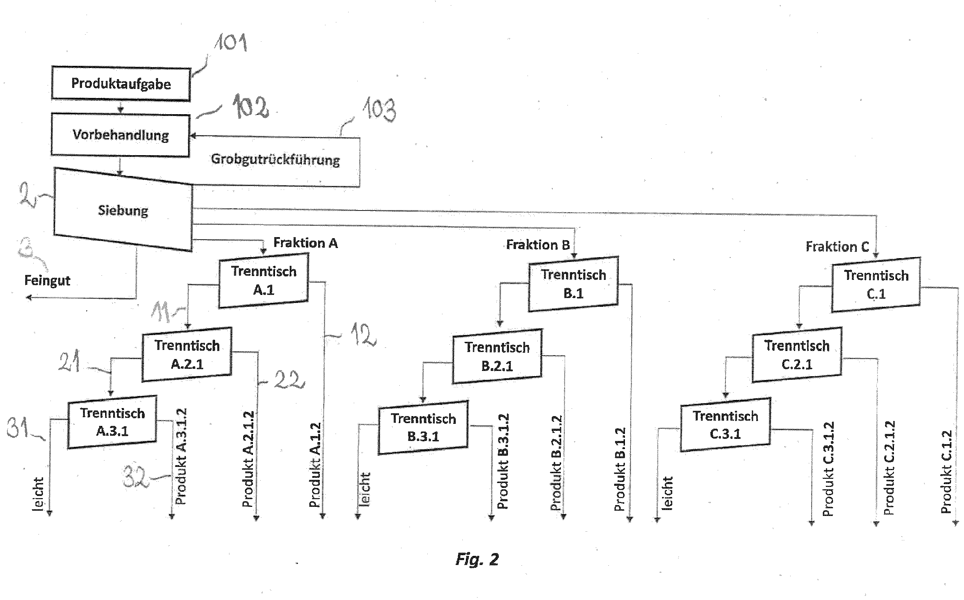

Das in Figur 2 gezeigte erfindungsgemäße System unterscheidet sich von dem in Figur 1 gezeigten dadurch, dass innerhalb jeder Kaskade anstelle der Schwerfraktion pro Stufe jeweils die Leichtfraktion von einem gravimetrischen Trenntisch zum nächsten transportiert wird.

Für die Beschreibung der Produktaufgabe 101, der Vorbehandlung 102, der Fraktionierungs-Einheit 2, der Grobgutrückführung 103 sowie des Feinguts 3 kann daher auf die Ausführungen im Hinblick auf Figur 1 verwiesen werden.

Wie schon im Zusammenhang mit Figur 1, wird auch im Hinblick auf Figur 2 nur die Sortierung der Fraktion A näher beschrieben. Die Sortierung der Fraktionen B und C erfolgt dazu analog.

Die Fraktion A wird zunächst von der Fraktiönierungs-Einheit 2 zum gravimetrischen Trenntisch A.1 transportiert. Der gravimetrische Trenntisch A.1 sortiert die ihm zugeführte Fraktion A in eine Leichtfraktion 11 und eine Schwerfraktion 12, wie schon oben im Zusammenhang mit Figur 1 beschrieben. Die Schwerfraktion 12 enthält (überwiegend) Partikeln mit einer Dichte größer als der für den gravimetrischen Trenntisch A.1 eingestellten Trenndichte. Es ist zweckmäßig, die Trenndichte des gravimetrischen Trenntischs A.1 derart zu wählen, dass sie zwischen der Dichte der Partikeln der schwersten und zweitschwersten in der Fraktion A.enthaltenen Komponenten liegt. Gemäß dem Ausführungsbeispiel der Figur 2 wird die Schwerfraktion 12 als (End-)Produkt A.1.2 abtransportiert und/oder gesammelt. Wird die Trenndichte wie als zweckmäßig beschrieben gewählt, so enthält die Schwerfraktion 12 überwiegend nur Partikeln der Komponente mit der größten Dichte. Die Leichtfraktion 11 wird dem gravimetrischen Trenntisch A.2.1 der zweiten Stufe zugeführt. Dieser sortiert die Leichtfraktion 11 in eine weitere Leichtfraktion 21 und eine Schwerfraktion 22. Für den gravimetrischen Trenntisch A.2.1 ist eine bestimmte Trenndichte eingestellt, anhand derer die Partikeln der Leichtfraktion 21 von den Partikeln der Schwerfraktion 22 getrennt werden. Zweckmäßigerweise ist bei dem Ausführungsbeispiel der Figur 2 die Trenndichte des gravimetrischen Trenntischs A.2.1 derart vorgegeben, dass sie zwischen der Dichte der Partikeln der schwersten und zweitschwersten in der Leichtfraktion 11 enthaltenen Komponenten liegt. Die Schwerfraktion 22 enthält dann (überwiegend) Partikeln der Komponente der schwersten Dichte in der Leichtfraktion 11. In anderen Worten, die Schwerfraktion 22 enthält Partikeln der zweitschwersten Komponente in Fraktion A. Die Schwerfraktion 22 kann dann als Endprodukt A.2.1.2 gesammelt werden.

Die Leichtfraktion 21 wird dem gravimetrischen Trenntisch A.3.1 der dritten Stufe zugeführt. Dieser sortiert die Leichtfraktion 21 in eine weitere Leichtfraktion 31 und eine Schwerfraktion 32. Für den gravimetrischen Trenntisch A.3.1 ist eine weitere bestimmte Trenndichte eingestellt, anhand derer die Partikeln der Leichtfraktion 31 von den Partikeln der Schwerfraktion 32 getrennt werden. Zweckmäßigerweise ist bei dem Ausführungsbeispiel der Figur 2 diese bestimmte Trenndichte des gravimetrischen Trenntischs A.3.1 derart vorgegeben, dass sie zwischen der Dichte der Partikeln der schwersten und zweitschwersten Komponente in der Leichtfraktion 21 liegt. Die Schwerfraktion 32 enthält dann (überwiegend) Partikeln der Komponente mit der drittgrößten Dichte in der Fraktion A. Die Schwerfraktion 32 kann dann als Endprodukt A.3.1.2 abtransportiert und/oder gesammelt werden. Unter der Annahme, dass die Fraktion vier zu trennende Komponenten enthält, entspricht die Leichtfraktion 31 dann der letzten und leichtesten Komponente. Diese kann als Endprodukt (End-)Produkt A.3.1.2 abtransportiert und/oder gesammelt werden.

Die gezeigte Leichtfraktion 31 kann entweder auch als (End-)Produkt abtransportiert und/oder gesammelt werde. Es ist aber auch möglich, dass diese anderweitig weiterverarbeitet wird, etwa indem sie einem zusätzlichen Sortiervorgang mithilfe eines entsprechenden gravimetrischen Trenntischs unterzogen wird.

Die Sortierung der Fraktionen B mithilfe der Trenntische B.1, B.2.1 und B.3.1 in (End-)Produkte B.1.2, B.2.1.2 bzw. B.3.1.2 und C mithilfe der Trenntische C.1, C.2.1 und C.3.1 in (End-)Produkte C.1.2, C.2.1.2 bzw. C.3.1.2 erfolgt analog zu der Sortierung der Fraktion A. Die vorgegebenen Dichten der gravimetrischen Trenntische in einer bestimmten Stufe können für alle Fraktionen bzw. Kaskaden identisch sein, dies ist erfindungsgemäß allerdings nicht zwingend erforderlich.

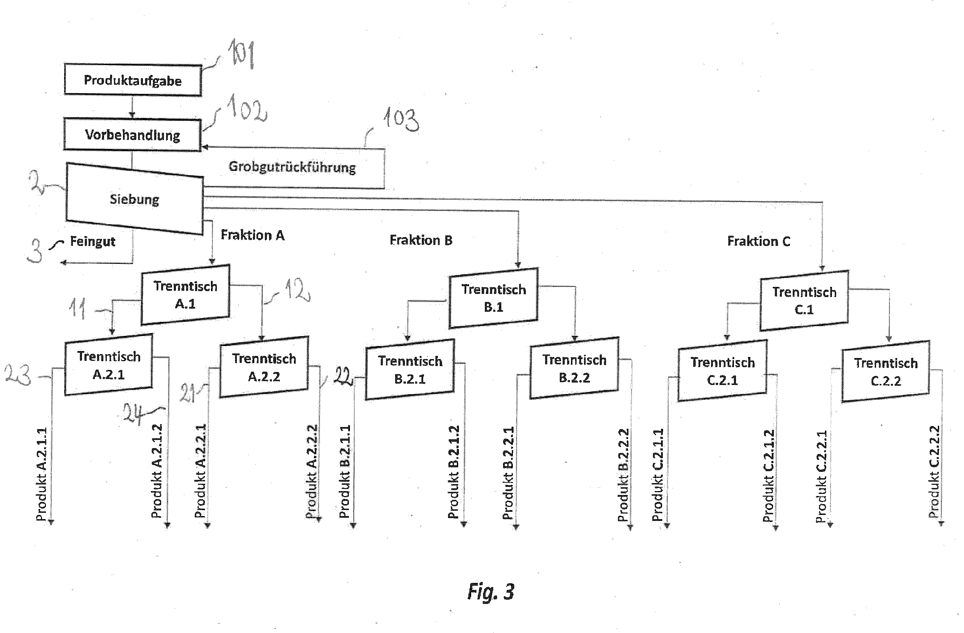

Das in Figur 3 gezeigte erfindungsgemäße System unterscheidet sich von dem in Figuren 1 und 2 gezeigten dadurch, dass innerhalb jeder Kaskade sowohl die Leicht- als auch die Schwerfraktion von gravimetrischen Trenntischen einer Stufe zu den gravimetrischen Trenntischen der nächsten Stufe weitertransportiert werden. Dadurch wird pro Kaskade eine Baumstruktur gebildet.

Für die Beschreibung der Produktaufgabe 101, der Vorbehandlung 102, der Fraktionierungs-Einheit 2, der Grobgutrückführung 103 sowie des Feinguts 3 kann erneut auf die Ausführungen im Hinblick auf Figur 1 verwiesen werden.

Wie schon im Zusammenhang mit Figuren 1 und 2, wird auch im Hinblick auf Figur 3 nur die Sortierung der Fraktion A näher beschrieben. Die Sortierung der Fraktionen B und C erfolgt dazu analog.

Die Fraktion A wird zunächst von der Fraktionierungs-Einheit 2 zum gravimetrischen Trenntisch A.1 transportiert. Der gravimetrische Trenntisch A.1 sortiert die ihm zugeführte Fraktion A in eine Leichtfraktion 11 und eine Schwerfraktion 12, wie schon oben im Zusammenhang mit Figur 1 beschrieben. Die Schwerfraktion 12 enthält (überwiegend) Partikeln mit einer Dichte größer als der für den gravimetrischen Trenntisch A.1 eingestellten Trenndichte. Unter der Annahme, dass die Fraktion A eine Anzahl $P$ (hier: $P = 4$) zu trennende Komponenten enthält, es in diesem Fall zweckmäßig, die Trenndichte des gravimetrischen Trenntischs A.1 derart zu wählen, dass sie zwischen der Dichte der leichtesten $P/2$ (hier: 2) und der schwersten $P/2$ in der Fraktion A enthaltenen zu trennenden Komponenten liegt; dann enthält die Leichtfraktion 11 überwiegend ein Stoffgemisch aus Partikeln der $P/2$ leichtesten Komponenten, die Schwerfraktion 12 überwiegend ein Stoffgemisch aus Partikeln der $P/2$ schwersten Komponenten.

Gemäß dem Ausführungsbeispiel der Figur 3 wird die Leichtfraktion 11 dem gravimetrischen Trenntisch A.2.1 zugeführt, die die Schwerfraktion 12 dem gravimetrischen Trenntisch A.2.2. Der gravimetrische Trenntisch A.2.1 sortiert die Leichtfraktion 11 in eine weitere Leichtfraktion 23 und eine Schwerfraktion 24. Für den gravimetrischen Trenntisch A.2.1 ist eine bestimmte Trenndichte eingestellt, anhand derer die Partikeln der Leichtfraktion 23 von den Partikeln der Schwerfraktion 24 getrennt werden. Zweckmäßigerweise ist bei dem Ausführungsbeispiel der Figur 3 die Trenndichte des gravimetrischen Trenntischs A.2.1 derart vorgegeben, dass sie zwischen der Dichte der leichtesten P/4 (hier: 1) und $P/4$ nächstschwereren zu trennenden Komponenten liegt. Die Leichtfraktion 23 enthält dann (überwiegend) Partikeln der Komponente mit der geringsten Dichte; die Schwerfraktion 24 enthält dann (überwiegend) Partikeln der Komponente mit der nächstgrößeren Dichte. Der gravimetrische Trenntisch A.2.2 sortiert die Schwerfraktion 12 in eine Leichtfraktion 21 und eine Schwerfraktion 22. Für den gravimetrischen Trenntisch A.2.2 ist eine bestimmte Trenndichte eingestellt, anhand derer die Partikeln der Leichtfraktion 21 von den Partikeln der Schwerfraktion 22 getrennt werden. Zweckmäßigerweise ist bei dem Ausführungsbeispiel der Figur 3 die Trenndichte des gravimetrischen Trenntischs A.2.2 derart vorgegeben, dass sie zwischen der Dichte der zweitschwersten $P/4$ (hier: 1) und $P/4$ schwersten zu trennenden Komponenten liegt. Die Leichtfraktion 21 enthält dann (überwiegend) Partikeln der Komponente mit der zweitgrößten Dichte; die Schwerfraktion 22 enthält dann (überwiegend) Partikeln der Komponente mit der größten Dichte.

Die Leicht- und Schwerfraktionen 21, 22, 23, 24 können dann als Endprodukte A.2.2.1, A.2.2.2, A.2.1.1 bzw. A.2.1.2 abtransportiert und/oder gesammelt werden.

Die Sortierung der Fraktionen B mithilfe der Trenntische B.1, B.2.1 und B.2.2 in (End-)Produkte B.2.1.1, B.2.1.2, B.2.2.1, B.2.2.2 und C mithilfe der Trenntische C.1, C.2.1 und C.2.2 in (End-)Produkte C.2.1.1, C.2.1.2, C.2.2.1, C.2.2.2 erfolgt analog zu der Sortierung der Fraktion A. Die vorgegebenen Dichten der gravimetrischen Trenntische in einer bestimmten Stufe können für alle Fraktionen bzw. Kaskaden identisch sein, dies ist erfindungsgemäß allerdings nicht zwingend erforderlich.

Vergleicht man die Struktur der Kaskaden in Figuren 1 und 2, einerseits, mit der Baumstruktur in Figur 3, so stellt man zunächst fest, dass in allen drei Figuren pro Kaskade drei gravimetrische Trenntische eingesetzt werden, und jeweils vier Endprodukte erzeugt werden können. In Figuren 1 und 2 sind dazu aber drei Stufen, in Figur 3 nur zwei Stufen erforderlich. Die Bearbeitungsdauer ist in der Baumstruktur von Figur 3 im Vergleich zu jener der Strukturen der Figuren 1 und 2 verkürzt. Dies wurde weiter oben allgemein bereits dargelegt.

In Bezug auf Figuren 1, 2 und 3 wird weiter angemerkt, dass die genannten Komponenten nicht nur einen einzigen Stoff oder ein einziges Material umfassen zu brauchen, sie können vielmehr auch Gemische oder Zusammensetzungen von mehreren Stoffen oder Materialien umfassen.

Nachfolgend werden Ausgestaltungen der Produktaufgabe 101, Vorbehandlung 102, Fraktionierungs-Einheit 2 und Grobgutrückführung 103, die jeweils in Figuren 1, 2 und 3 gezeigt sind, beschrieben..

Die Produktaufgabe 101 kann etwa dadurch erfolgen, dass das Stoffgemisch, wie etwa zu behandelnde Baureststoffe oder Abbruchmaterialien, durch einen Förderer, z.B. einen geeigneten Frontlader dem System oder der Anlage aufgegeben werden.

Die Vorbehandlung 102 kann einen ersten Aufbereitungsschritt umfassen, in dem mittels einer Grobklassierung grobe und/oder sehr unförmige Störstoffe mit einer (Korn-)Größe oberhalb einer bestimmten Abtrenngröße, etwa größer als 80 mm, abgetrennt werden. Dadurch können Stoffe und Materialien wie z.B. Textilien, Gipsplatten, Holz, Rohre, Armierungseisen abgetrennt werden. Geeignet für diese Abtrennung sind z.B. sogenannte Stangensizer.

Die anfallenden Aufgabestoffe mit einer (Korn-)Größe unterhalb der bestimmten Abtrenngröße können bereits einen hohen Anteil sortierbarer Partikel enthalten. Daher kann die Vorbehandlung 102 einen Scheider zum Abtrennen von Metallteilen umfassen, um aus dem im Stoffgemisch mit Stoffen / Materialien unterhalb der bestimmten Abtrenngröße noch enthaltene ferro-magnetische Metalle nach Zuführung durch ein Förderorgan wie z.B. einen Vibrationsförderer abzutrennen. Bevorzugt handelt es sich um einen Magnetscheider, z.B. einen über dem nachfolgenden Förderband angeordneten sogenannten Überbandmagrietscheider. Optional kann ein Scheider für nichtmagnetische Metalle hinzugefügt werden.

Die Vorbehandlung kann weiter eine Brech-Einheit, umfassen, die vorzugsweise einen Backenbrecher (engl.: Jaw Crusher) umfasst. Dieser Brech-Einheit kann das von Metallteilen befreite Stoffgemisch zugeführt werden. Die Brech-Einheit ist in der Lage, die Stoffgemische weiter zu zerkleinern. Insbesondere wird neben der Zerkleinerung erreicht, dass in BauReststoffen üblicherweise enthaltene Verbundmaterialien nicht nur zerkleinert, sondern an ihren Verbindungsstellen der verschiedenen Stoffe zerteilt werden. Bei derartigen Verbundmaterialien handelt es sich z.B. um mit Mörtel- und Putzresten behaftete Ziegelsteine, an mineralischen Stoffen haftende Isoliermaterialien sowohl organischer Natur (Schaumstoffe, Mineralwolle) als auch anorganischer Natur (Bims, Blähton, Perlite, Zeolithe) usw.

Durch die Zerkleinerung der Partikeln und die Trennung der Stoffe voneinander wird die Sortierung der Materialien im weiteren Prozessverlauf erleichtert, weil die vorher vorhandene Misch-Dichte der Partikeln aus zwei oder mehreren Stoffen in Richtung der Dichte der jeweils reinen Stoffe verändert wird. Hinzu kommt, dass z.B. Putz- und Mörtelreste durch den Brechvorgang bevorzugt in feine Partikeln zerfallen und nachfolgend in Form von Sanden und mineralischem Staub vorliegen. Sande und Stäube lassen sich im weiteren Prozessverlauf relativ einfach mittels Siebmaschinen von gröberen Materialien abtrennen, als welche harte und schwere Mineralien wie Kies, Schotter, Keramik usw. bevorzugt anfallen.

Nach der Vorbehandlung 102 folgt die Fraktionierungs-Einheit 2. Diese umfasst vorzugsweise eine Siebmaschine, bevorzugt einen sog. Sizer mit zur Waagerechten schräg angeordneten Siebbelägen. Letztere haben sich in der Baustoffindustrie bewährt, sind weitgehend unempfindlich gegen Verschmutzungen und Verstopfungen und können bevorzugt grobe Materialien bei hohen Feststoffdurchsätzen sieben. Jedoch können auch andere Siebmaschinen eingesetzt werden. Wie oben näher ausgeführt, erzeugt die Fraktionierungs-Einheit 2 Fraktionen mit einer für die nachfolgende Sortierung optimal engen Korngrößenverteilung.

Da sich Reste von Verbundstoffen insbesondere in der in der Brech-Einheit nicht zerlegten gröbsten Körnung befinden können, wird das Grobgut, d.h., Partikeln mit einer (Korn-)Größe oberhalb einer bestimmten Minimalgröße, etwa größer als 50 mm, von der Fraktionierungs-Einheit 2 zurück in die Brech-Einheit der Vorbehandlung 102 geführt. Dies wird mithilfe der Grobgutrückführung 103 erreicht. Durch die Kombination aus Brech-Einheit und Fraktionierungs-Einheit 2 mit Grobgutrückführung 103 wird sichergestellt, dass nur Partikeln mit einer (Korn-)Größe unterhalb der bestimmten Minimalgröße, etwa kleiner als 50 mm, in die nachfolgende weitere Aufbereitung und Sortierung gehen. Abhängig von der Natur der konkreten Baureststoffe und Abbruchmaterialien im Stoffgemisch kann der Trennschnitt zur Rückführung auf die Brech-Einheit auch bei einer anderen Korngröße liegen, beispielsweise bei einer bestimmten Minimalgröße von 40 mm oder bei 30 mm. Dementsprechend ist der Siebbelag des oberen Decks der Fraktionierungs-Einheit 2 auszuwählen. Erfolgt die Trennung und Rückführung bei weniger als 50 mm, so wird in der Regel auch die Abstufung der unter dem oberen Deck liegenden, anderen Siebgewebe geändert. Im Übrigen wird durch das Brechen des gesamten Stoffgemisches nach der Vorbehandlung auf bereits relativ kleine Partikelgrößen z.B. unterhalb 50 mm oder vorzugsweise unterhalb 32 oder gar unterhalb 16 mm der Einsatz automatisierter Verfahren mittels gravimetrischer Trenntische erleichtert, während üblicherweise die Zerkleinerung von Stoffgemischen ohne vorherige Sortierung eher vermieden wird/wurde. Gemeinhin ging man davon aus, dass es einfacher sei, Fremdstoffe vor einer Zerkleinerung des gesamten Materiales auszusortieren. Allerdings sind/waren dazu üblicherweise viel manueller Aufwand nötig. Die Sortierung grober Materialien mittels gravimetrischer Trenntische ist dagegen schwierig und läuft bei gut zerkleinertem Material besser. Somit kann der Aufwand einer Vorbehandlung der Stoffgemische auf der Baustelle oder am Ort der Anlagen reduziert werden und Kosten gespart werden.

Mithilfe von Vorbehandlung 102, Fraktionierungs-Einheit 2 und Grobgutrückführung 103 können besonders bevorzugt Fraktionen in den folgenden Bereichen gewonnen werden: 1-3 mm; 3-9 mm und 9-25 mm oder 2-4 mm; 4-8 mm, 8-16 mm. Diese Fraktionen sind insbesondere für die Verwendung als Rohstoff bzw. Zuschlagstoff zur Herstellung von Beton höchster Qualität entscheidend. Um die optimale Zerkleinerung auf unter 25 mm bzw. unter 16 mm für die nachfolgende Sortierung zu erreichen, wird die Fraktion 25-50 mm einer weiteren Zerkleinerungsstufe mittels eines Prall-Brechers (engl. Impact Crusher), der Teil der Vorbehandlung 102 sein kann, und nachfolgend über eine weitere Siebmaschine (Sizer), die Teil der Fraktionierungs-Einheit 2 sein kann, und eine Rückführung 103 des Grobgutes größer 25 mm, bzw. 16 mm zugeführt. In der Siebmaschine abgetrenntes Feingut mit einer (Korn-)Größe kleiner als 1 mm, bzw. 2mm wird zusammen mit dem im Sizer anfallenden Feingut kleiner als 1 mm, bzw. 2 mm ohne weitere Sortierung abgeführt. Dieses Feinmaterial setzt sich vorwiegend aus Sanden und anorganischen Stäuben zusammen, über deren Verwendung als Baustoff optional entschieden werden kann.

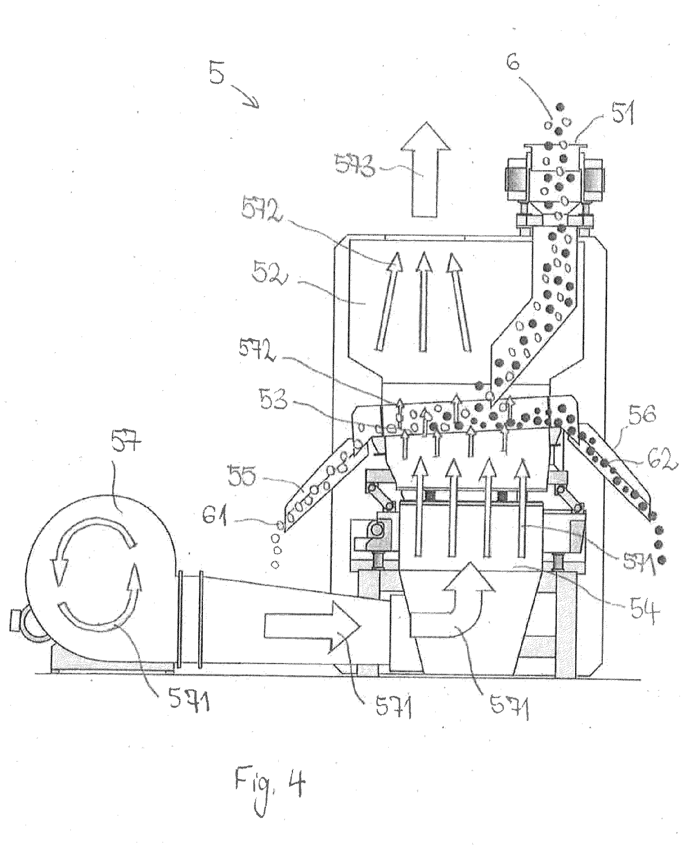

Figur 4 zeigt einen gravimetrischen Trenntisch 5, der in einem erfindungsgemäßen System oder einer erfindungsgemäßen Anlage zur Aufbereitung und/oder zum Recycling für Baureststoffe und/oder Abbruchmaterialien eingesetzt werden kann. Das Stoffgemisch wird als Aufgabegut 6 in eine Zuführung 51 des Trenntischs 5 eingeleitet.

Der gezeigte gravimetrische Trenntisch 5 umfasst einen schräg angeordneten Arbeitsboden 53, der von unten mit Luft 571, 572 durchströmt wird. Die Luft 571, 572, die den Arbeitsboden 53 durchströmt, wird durch einen Zuluftventilator 57 erzeugt. Die Luft 571 wird vom Zuluftventilator 57 in das Unterteil 54 des gravimetrischen Trenntischs 5 eingeleitet, durchströmt dann den Arbeitsboden 53, strömt weiter in das Oberteil 52 des gravimetrischen Trenntischs 5 und verlässt diesen dann als Abluft 573.

Der Arbeitsboden 53 ist in einem Winkel zur Vertikalen geneigt und kann in Richtung der Steigung des Arbeitsbodens 53 vibrieren. Dadurch werden die im Aufgabegut 6 befindlichen schweren Partikeln 62, welche trotz der vertikalen Luftströmung 571, 572 bevorzugt auf den Arbeitsboden 53 absinken, aufwärts zum oberen Ende des Arbeitsbodens 53 gefördert und aus dem gravimetrischen Trenntisch über den Austritt 56 für die Schwerfraktion 62 entlassen. Die leichten Partikeln 61 werden durch die senkrechte Aufwärtsströmung der Luft 571, 572 fluidisiert und leicht angehoben, wodurch Sie keinen oder nur einen geringen Kontakt zum Arbeitsboden 53 haben und folglich durch die Fluidisierung nach zum unteren Ende des Arbeitsbodens 53 fließen. Dort können sie über den Austritt 55 für die Leichtfraktion 61 aus dem gravimetrischen Trenntisch 5 austreten.

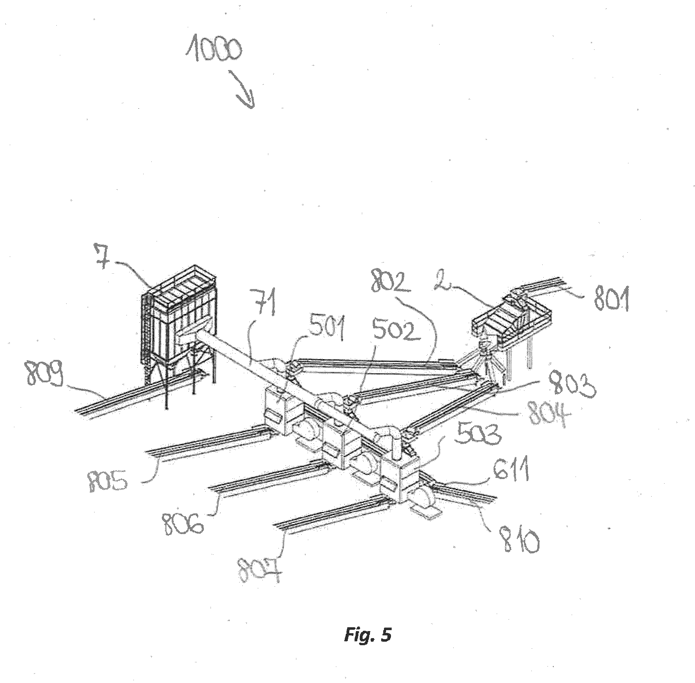

Durch den gravimetrischen Trenntisch kann eine Fraktion nicht nur in eine Leicht- und Schwerfraktion getrennt werden, diese Fraktionen werden außerdem entstaubt, bzw. von sehr leichten Materialien befreit, welche mit der Abluft 573 nach oben aus dem Trenntisch ausgetragen und in einem nachgeschalteten Abluftfilter abgeschieden werden (s. dazu auch Figur 5).

Durch die Einstellung der Stärke des Luftstroms 571, 572, des Neigungswinkels des Arbeitsbodens 53, der Vibrationsfrequenz und/oder der Vibrationsamplitude ist es möglich, eine bestimmte Trenndichte vorzugeben, die die Leichtfraktion 61 von der Schwerfraktion 62 unterscheidet.

Durch die erfindungsgemäße Aufteilung des Stoffgemischs in diverse Fraktionen wird einem gravimetrischen Trenntisch 5 ein Aufgabegut 6 mit einer optimal engen Korngrößenverteilung zugeführt. Dadurch kann verhindert werden, dass kleine, schwere Partikeln (also Partikeln mit großer Dichte), die ein ähnliches Fluidisierungs- oder Sinkverhalten in Luft aufweisen können wie größere, leichte Partikeln (also Partikeln mit geringer Dichte) falsch nach der Dichte sortiert werden. Verengt man die Korngrößenverteilung des Aufgabegutes 6, so kann dadurch erreicht werden, dass die Partikeln nicht nach deren Schwere der Einzelpartikeln sortiert werden, sondern tatsächlich nach der Dichte der die Partikeln bildenden Stoffe.

In Figur 5 ist, der besseren Übersichtlichkeit halber, ein Ausschnitt einer erfindungsgemäßen Anlage 1000 zur Aufbereitung und/oder zum Recycling von Baureststoffen und/oder Abbruchmaterialien gezeigt. Die als Stoffgemisch vorliegenden Baureststoffe und/oder Abbruchmaterialien werden über eine Fördereinheit 801, wie das gezeigte Förderband 801, in die Fraktionierungs-Einheit 2 transportiert. Gezeigt ist hier ein Sizer mit zur Waagerechten schräg angeordneten Siebbelägen.

Produktaufgabe, Vorbehandlung sowie eine Grobgutrückführung wie oben im Zusammenhang mit Figuren 1, 2 und 3 beschrieben, könnten der Fraktionierungs-Einheit 2 vorgeschaltet sein, sind in Figur 5 aus Gründen der Übersichtlichkeit allerdings nicht gesondert eingezeichnet.

In dem gezeigten Ausführungsbeispiel wird das Stoffgemisch mithilfe der Fraktionierungs-Einheit 2 in drei Teilfraktionen mit unterschiedlichen Korngrößenverteilungen aufgeteilt. Zum Beispiel kann die erste Teilfraktion Korngrößen zwischen 1 und 3 mm enthalten, die zweite Teilfraktion Korngrößen zwischen 3 und 9 mm, und die dritte Teilfraktion Korngrößen zwischen 9 und 25 mm. Diese werden über Fördereinheiten / Förderbänder 802, 803 und 804 zu zugeordneten gravimetrischen Trenntischen 501, 502 bzw. 503 transportiert.

Die Anlage umfasst damit drei Kaskaden von gravimetrischen Trenntischen. Explizit gezeigt ist in Figur 5 nur eine Stufe von gravimetrischen Trenntischen, gebildet aus den gravimetrischen Trenntischen 501, 502, 503; dies ist allerdings lediglich der Übersichtlichkeit der Darstellung geschuldet; die vollständige erfindungsgemäße Anlage umfasst mehr als einen gravimetrischen Trenntisch in jeder Kaskade, wie oben ausgeführt und außerdem die verschiedenen, möglichen Stufen der Vorbehandlung.

Bei jedem der gravimetrischen Trenntische 501, 502, 503 kann es sich um einen gravimetrischen Trenntisch wie jenem, der im Zusammenhang mit Figur 4 beschrieben wurde, handeln.

In dem gezeigten Beispiel werden die Leichtfraktionen 611 der drei gravimetrischen Trenntische 501, 502, 503 der ersten Stufe über eine Fördereinheit / ein Förderband 810 abtransportiert und können etwa in einer Sammelstelle (nicht gezeigt) für den Abtransport und/oder weitere Bearbeitung gesammelt. Die besagten Leichtfraktionen 611 umfassen hier damit Partikeln, deren Korngröße in dem von allen drei Fraktionen abgedeckten Korngrößenbereich liegt (für das vorstehend genannte Zahlenbeispiel bedeutet dies: die Partikeln haben eine Korngröße zwischen 1 und 25 mm), deren Dichte aber unterhalb einer bestimmten Trenndichte liegt.

Wie oben dargelegt, wird durch die Sortierung der Fraktionen mit unterschiedlichen Korngrößenverteilungen erreicht, dass eine genaue Trennung der Partikeln nach der Dichte erfolgen kann. Die Schwerfraktionen der gravimetrischen Trenntische 501, 502, 503 werden über jeweilige Fördereinheiten / Förderbänder 805, 806 bzw. 807 zu entsprechenden gravimetrischen Trenntischen der zweiten Stufe (nicht mehr gezeigt) befördert und sortiert. Für die Verarbeitung in den weiteren Stufen kann insbesondere auf die Ausführungen zu Figuren 1, 2 und 3 und auf den einleitenden Teil verwiesen werden.

Es ist schließlich gezeigt, dass jeder der drei gravimetrischen Trenntische 501, 502, 503 über eine Rohrleitung 71 mit einem Abluftfilter 7 verbunden ist. Der Abluftfilter 7 dient dazu, die Abluft aus den gravimetrischen Trenntischen 501, 502, 503 abzusaugen (s. dazu auch die Beschreibung von Figur 4). Die Abluft kann auch leichte Partikeln, wie etwa Staub und leichte Holzteile enthalten. Diese werden aus dem Abluftfilter 7 abgeschieden und über eine Fördereinheit / ein Förderband 809 zu einer Sammelstelle befördert.

Zweckmäßig ist jeder Stufe von gravimetrischen Trenntischen ein separater Abluftfilter zugewiesen.

Liste der Bezugszeichen:

101 Produktaufgabe

102 Vorbehandlung

103 Grobgutrückführung

2 Fraktionierungs-Einheit

3 Feingut

A, B, C Fraktionen

A.1, A.2.1, A.2.2, A.3.1, A.3.2 gravimetrische Trenntische der ersten Kaskade

B.1, B.2.1, B.2.2, B.3.1, B.3.2 gravimetrische Trenntische der zweiten Kaskade

C.1, C.2.1, C.2.2, C.3.1, C.3.2 gravimetrische Trenntische der dritten Kaskade

11 Leichtfraktion des gravimetrischen Trenntischs A.1

12 Schwerfraktion des gravimetrischen Trenntischs A.1

21 Leichtfraktionen der gravimetrischen Trenntische A.2.1, A.2.2

22 Schwerfraktionen der gravimetrischen Trenntische A.2.1, A.2.2

23 Leichtfraktion des gravimetrischen Trenntischs A.2.1

24 Schwerfraktion des gravimetrischen Trenntischs A.2.1

31 Leichtfraktionen der gravimetrischen Trenntische A.3.1, A.3.2

32 Schwerfraktionen der gravimetrischen Trenntische A.3.1, A.3.2

A.1.2, A.2.1.1, A.2.1.2, A.2.2.1, A.2.2.2, A.3.1.2, A.3.2.1, A.3.2.2 Endprodukte aus Fraktion A

B.1.2, B.2.1.1, B.2.1.2, B.2.2.1, B.2.2.2, B.3.1.2, B.3.2.1, B.3.2.2 Endprodukte aus Fraktion B

C.1.2, C.2.1.1, C.2.1.2, C.2.2.1, C.2.2.2, C.3.1.2, C.3.2.1, C.3.2.2 Endprodukte aus Fraktion A

5, 501, 502, 502 gravimetrische Trenntische

51 Zuführung des gravimetrischen Trenntischs 5

52 Oberteil des gravimetrischen Trenntischs 5

53 Arbeitsboden des gravimetrischen Trenntischs 5

54 Unterteil des gravimetrischen Trenntischs 5

55 Austritt für Leichtfraktion

56 Austritt für Schwerfraktion

57 Zuluftventilator

571, 572 Luftstrom

6 Aufgabegut

61 leichte Partikeln des Aufgabeguts 6 / Leichtfraktion

62 schwere Partikeln des Aufgabeguts 6 / Schwerfraktion

1000 Anlage zur Aufbereitung und/oder zum Recycling von Baureststoffen und/oder Abbruchmaterialien

611 Leichtfraktion der Anlage 1000

7 Abluftfilter

71 Rohrleitung zum Abluftfilter 7

801-810 Fördereinheiten / Förderbänder

**Patentansprüche**

1. System zur gravimetrischen Sortierung eines Stoffgemischs bei der Aufbereitung und/oder dem Recycling von Baureststoffen und/oder Abbruchmaterialien umfassend:

   - eine Fraktionierungs-Einheit (2), die dazu ausgebildet ist, das Stoffgemisch in mindestens $m$, m≥1, Fraktionen (A, B, C) aufzuteilen, wobei jede Fraktion Partikeln einer vorgegebenen Größenverteilung enthält;
   - mindestens $n \cdot m$ gravimetrische Trenntische (5, 501, 502, 503, A.1, A.2.1, A.2.2, A.3.1, A.3.2), die in m Kaskaden mit jeweils mindestens $n, n \geq 1$, gravimetrischen Trenntischen (5, 501, 502, 503) verteilt auf $n$ Stufen angeordnet sind, sodass pro Kaskade jede Stufe mindestens einen gravimetrischen Trenntisch (5, 501, 502, 503, A.1, A.2.1, A.2.2, A.3.1, A.3.2) umfasst,
   - wobei die Fraktionierungs-Einheit (2) mit den m gravimetrischen Trenntischen (5, 501, 502, 503, A.1) der ersten Stufe derart gekoppelt ist, dass jedem der gravimetrischen Trenntische (5, 501, 502, 503, A.1) der ersten Stufe eine verschiedene der mindestens m Fraktionen (A, B, C) zuführbar ist;
   - wobei jeder gravimetrische Trenntisch (5, 501, 502, 503, A.1, A.2.1, A.2.2,A.3.1, A.3.2) dazu ausgestaltet ist, ihm zugeführte Partikeln in eine ihm zugeordnete erste Teilfraktion (11, 21, 23, 31, 61) von Partikeln mit einer Dichte kleiner als eine ihm zugewiesene Trenndichte und eine ihm zugeordnete zweite Teilfraktion (12, 22, 24, 32, 62) von Partikeln mit einer Dichte größer als die zugewiesene Trenndichte zu trennen;
   - wobei innerhalb einer jeden Kaskade jeder gravimetrische Trenntisch (5, A.2.1, A.2.2, A.3.1, A.3.2) einer betrachteten Stufe mit einem gravimetrischen Trenntisch (5, 501, 502, 503, A.1, A.2.1, A.2.2) der vorhergehenden Stufe derart gekoppelt ist, dass entweder die erste Teilfraktion (11, 21, 23, 31, 61) oder die zweite Teilfraktion (12, 22, 24, 32, 62) des gravimetrischen Trenntischs (5, 501, 502, 503, A.1, A.2.1, A.2.2) der vorhergehenden Stufe dem gravimetrischen Trenntisch (5, A.2.1, A.2.2, A.3.1, A.3.2) der betrachteten Stufe zuführbar ist, und die zugewiesene Trenndichte des gravimetrischen Trenntischs (5, A.2.1, A.2.2, A.3.1, A.3.2) der betrachteten Stufe kleiner gewählt wird als die zugewiesene Trenndichte des gravimetrischen Trenntischs (5, 501, 502, 503, A.1, A.2.1, A.2.2) der vorhergehenden Stufe, wenn die erste Teilfraktion (11, 21, 23, 31, 61) zugeführt wird, die zugewiesene Trenndichte des gravimetrischen Trenntischs (5, A.2.1, A.2.2, A.3.1, A.3.2) der betrachteten Stufe größer gewählt wird als die zugewiesene Trenndichte des gravimetrischen Trenntischs (5, 501, 502, 503, A.1, A.2.1, A.2.2) der vorhergehenden Stufe, wenn die zweite Teilfraktion (12, 22, 24, 32, 62) zugeführt wird.

2. System gemäß Anspruch 1, wobei pro Kaskade jede Stufe genau einen gravimetrischen Trenntisch (5, A.1, A.2.1, A.2.2, A.3.1, A.3.2) enthält, dem eine Teilfraktion der vorhergehenden Stufe zuführbar ist.

3. System gemäß Anspruch 1, das mindestens eine Kaskade umfasst, die mindestens eine Stufe $k$, $1 < k < n$, mit zumindest einem zusätzlichen, zweiten, gravimetrischen Trenntisch (5, A.2.2) aufweist, wobei dem zweiten gravimetrischen Trenntisch (5, A.2.2) eine Teilfraktion der vorhergehenden Stufe $k$ - 1 zuführbar ist, und, wenn die Stufe $k$ mehr als einen zusätzlichen gravimetrischen Trenntisch (5) aufweist, jedem dieser weiteren gravimetrischen Trenntischen (5) eine entsprechende Teilfraktion der vorhergehenden Stufe $k-1$ zuführbar ist

4. System gemäß Anspruch 1 oder 3, wobei zumindest eine Kaskade in der Stufe $k$ eine Anzahl von $2^{k-1}$ ,gravimetrische Trenntische (5, A.2.1, A.2.2) aufweist, und zwar für jedes $k = 1$ bis $k = n$.

5. System gemäß einem der vorhergehenden Ansprüche, weiter umfassend eine oder mehrere Brech-Einheiten, ausgebildet zum Zerkleinern der Partikeln des Stoffgemischs, wobei die eine oder mehrere Brech-Einheiten derart mit der Fraktionierungs-Einheit (2) gekoppelt ist, dass das zerkleinerte Stoffgemisch der Fraktionierungs-Einheit (2) zuführbar ist.

6. System gemäß Anspruch 5, wobei die eine oder mehrere Brech-Einheiten weiter derart mit der Fraktionierungs-Einheit (2) gekoppelt ist bzw. sind, dass Partikeln des Stoffgemischs, die eine bestimmte vorgegebene Größe übersteigen, von der Fraktionierungs-Einheit (2) wieder in die eine oder mehrere Brech-Einheiten zurückführbar sind.

7. System gemäß einem der Ansprüche 5 oder 6 weiter einen Scheider zum Abtrennen von Metallteilen aus dem Stoffgemisch umfassend, wobei der Scheider mit der Brech-Einheit bzw. den Brech-Einheiten derart gekoppelt ist, dass das von den Metallteilen befreite Stoffgemisch vom Scheider der Brech-Einheit bzw. den Brech-Einheiten zuführbar ist.

8. System gemäß einem der vorhergehenden Ansprüche, wobei die zugewiesenen Trenndichten einer bestimmten Stufe für allen $m$ Kaskaden dieselben Werte aufweisen.

9. Anlage (1000) zur Aufbereitung und/oder zum Recycling von Baureststoffen und/oder Abbruchmaterialien, die das System gemäß einem der vorhergehenden Ansprüche umfasst, wobei die Baureststoffe und/oder Abbruchmaterialien als Stoffgemisch vorliegen.

10. Verwendung des Systems eines der Ansprüche 1-8 oder der Anlage (1000) gemäß Anspruch 9 zur Aufbereitung und/oder zum Recycling von Baureststoffen und/oder Abbruchmaterialien, wobei die Baureststoffe und/oder Abbruchmaterialien als Stoffgemisch vorliegen.

11. Verfahren zur gravimetrischen Sortierung eines Stoffgemischs bei der Aufbereitung und/oder zum Recycling von Baureststoffen und/oder Abbruchmaterialien, wobei die Baureststoffe und/oder Abbruchmaterialien als Stoffgemisch vorliegen, umfassend die folgenden Schritte:

- Aufteilen des Stoffgemischs in mindestens $m$, $m \geq 1$, Fraktionen (A, B, C), wobei jede Fraktion (A, B, C) Partikeln einer vorgegebenen Größenverteilung enthält;
- für jede Fraktion (A, B, C) einer Auswahl von $m$ der mindestens $m$ Fraktionen:

- Trennen der Partikeln der Fraktion mithilfe eines gravimetrischen Trenntischs (5, 501, 502, 503, A.1) einer ersten Stufe in eine erste Teilfraktion (11) der ersten Stufe mit Partikeln mit einer Dichte unterhalb einer dem gravimetrischen Trenntisch zugewiesenen Trenndichte und in eine zweite Teilfraktion (12) der ersten Stufe mit Partikeln mit einer Dichte oberhalb der zugewiesenen Trenndichte;
- für $k = 1$ bis $k = n-1$, $n \geq 1$, Wiederholen der folgenden Schritte, um Teilfraktionen (21, 22, 23, 24, 31, 32) der Stufe $n$ zu erzeugen:

(i) Transportieren eines Teils oder sämtlicher in Stufe $k$erzeugten Teilfraktionen zu gravimetrischen Trenntischen (5, A.2.1, A.2.2, A.3.1, A.3.2) der Stufe $k + 1$, wobei jedem gravimetrischen Trenntisch (5, A.2.1, A.2.2, A.3.1, A.3.2) der Stufe $k + 1$ eine transportierte Teilfraktion zugeordnet wird, und jedem gravimetrischen Trenntisch eine Trenndichte zugewiesen ist,
(ii) Trennen einer jeden der zu den gravimetrischen Trenntischen (5, A.2.1, A.2.2, A.3.1, A.3.2) der Stufe $k+1$ transportierten Teilfraktionen mithilfe des ihr zugeordneten gravimetrischen Trenntischs (5, A.2.1, A.2.2, A.3.1, A.3.2) in zwei weitere Teilfraktionen, wobei die erste Teilfraktion (21, 23, 31) Partikeln mit einer Dichte unterhalb der dem gravimetrischen Trenntisch zugewiesenen Trenndichte aufweist und die zweite Teilfraktion (22, 24, 32) Partikeln mit einer Dichte oberhalb der zugewiesenen Trenndichte aufweist.

12. Verfahren gemäß Anspruch 11, wobei für jedes $k$ jeweils nur genau eine der in der Stufe $k$erzeugten Teilfraktionen zu einem zugeordneten gravimetrischen Trenntisch (5, A.2.1, A.2.2, A.3.1, A.3.2) der Stufe $k + 1$ transportiert und von diesem getrennt wird.

13. Verfahren gemäß Anspruch 11, wobei für zumindest ein *k* mindestens zwei der in der Stufe *k* erzeugten Teilfraktionen zu jeweils zugeordneten gravimetrischen Trenntischen (5, A.2.1, A.2.2, A.3.1, A.3.2) der Stufe *k* + 1 transportiert und von diesen getrennt werden.

14. Verfahren gemäß Anspruch 11 oder 13, wobei für zumindest eine Fraktion (A, B, C) für jedes *k* jeweils sämtliche der in der Stufe *k* erzeugten Teilfraktionen zu zugeordneten gravimetrischen Trenntischen (5, A.2.1, A.2.2, A.3.1, A.3.2) der Stufe *k* + 1 transportiert und von diesen getrennt werden.

15. Verfahren gemäß einem der Ansprüche 11-14, vor dem Schritt des Aufteilens des Stoffgemischs in mindestens *m* Fraktionen (A, B, C) den folgenden Schritt umfassend:

   - Zerkleinern der Partikeln des Stoffgemischs mithilfe einer oder mehrerer Brech-Einheiten;
   - nach dem Zerkleinern Zurückführen zur einen oder zu den mehreren Brech-Einheiten von Partikeln, deren Größe keiner der Größenverteilung der *m* Fraktionen entspricht.

16. Verfahren gemäß Anspruch 15, weiter umfassend:

   - vor dem Zerkleinern des Stoffgemischs Abtrennen von Metallteilen aus dem Stoffgemisch und
   - anschließend Zerkleinern des von den Metallteilen befreiten Stoffgemischs.

Fig. 1

Fig. 2

Fig. 3

Fig. 4

Fig. 5

Europäisches
Patentamt

European
Patent Office

Office européen
des brevets

## EUROPÄISCHER RECHERCHENBERICHT

**Nummer der Anmeldung**

**EP 21 18 9550**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 25 538 B4 (SCHWENK ZEMENT KG [DE]) 19. Januar 2006 (2006-01-19) * Spalte 3, Zeile 38 – Spalte 7, Zeile 11; Abbildungen * ----- | 1-16 | INV. B03B9/06 B03B4/02 B03B4/06 B07B4/08 |
| X | US 4 671 867 A (BATTIE GABRIEL [FR] ET AL) 9. Juni 1987 (1987-06-09) * Spalte 3, Zeile 39 – Spalte 5, Zeile 60; Abbildungen 1,2 * ----- | 1-4,8-14 | B07B9/00 |
| X | EP 0 294 801 A2 (FOERDER & ANLAGENTECHNIK GMBH [DE]) 14. Dezember 1988 (1988-12-14) * Spalte 2, Zeile 3 – Spalte 5, Zeile 9; Abbildungen * ----- | 1-4,8-14 | |

**RECHERCHIERTE SACHGEBIETE (IPC)**

B03B
B07B

Der vorliegende Recherchenbericht wurde für alle Patentansprüche erstellt

| Recherchenort | Abschlußdatum der Recherche | Prüfer |
|---|---|---|
| **München** | **11. Januar 2022** | **Leitner, Josef** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 9550

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2022

| Im Recherchenbericht angeführtes Patentdokument | Datum der Veröffentlichung | Mitglied(er) der Patentfamilie | Datum der Veröffentlichung |
|---|---|---|---|
| DE 19625538 B4 | 19-01-2006 | KEINE | |
| US 4671867 A | 09-06-1987 | AT 64332 T | 15-06-1991 |
| | | DE 161995 T1 | 19-03-1987 |
| | | EP 0161995 A1 | 21-11-1985 |
| | | ES 8801592 A1 | 16-02-1988 |
| | | ES 8900269 A1 | 01-10-1988 |
| | | FR 2561554 A1 | 27-09-1985 |
| | | IL 74588 A | 20-10-1987 |
| | | KR 850007011 A | 30-10-1985 |
| | | RO 93730 B | 02-07-1988 |
| | | US 4671867 A | 09-06-1987 |
| | | YU 45085 A | 31-10-1988 |
| EP 0294801 A2 | 14-12-1988 | DE 3719288 A1 | 22-12-1988 |
| | | EP 0294801 A2 | 14-12-1988 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 3803809 A1
- WO 2004016355 A1
- US 6382425 B1
- DE 4036427 A1
- DE 102006006372 A1
- EP 0548491 B1
- EP 0456666 B1
- AT 398534 B
- EP 0755726 B1
- EP 0198945 A2
- DE 2842259 A1

- US 20130126401 A1
- DE 3644603 C1
- DE 3708180 A1
- DE 4413288 C2
- DE 102015108563 B3
- US 5240114 A
- US 1839117 A
- US 5992774 A
- US 5314266 A
- DE 102004050026 A1
- AT 345566 B

**In der Beschreibung aufgeführte Nicht-Patentliteratur**

- **WEN-LING HUANG.** *Resources, Conservation and Recycling,* 2002, vol. 37, 23-37